# EUROPEAN PATENT SPECIFICATION

(11) **EP 1 194 876 B1**
(45) Date of publication and mention of the grant of the patent: **13.07.2011**
(21) Application number: 00930049.2
(22) Date of filing: 10.05.2000
(51) Int. Cl.: G06F 9/46

(54) **METHOD AND APPARATUS IN A COMMUNICATION NETWORK**
VERFAHREN UND VORRICHTUNG IN EINEM KOMMUNIKATIONS-NETZWERK
PROCEDE ET APPAREIL MIS EN OEUVRE DANS UN RESEAU DE COMMUNICATION

(30) Priority: 10.05.1999 SE 9901694; 10.05.1999 US 307712
(43) Date of publication of application: 10.04.2002
(73) Proprietor: Telefonaktiebolaget L M Ericsson (publ), 164 83 Stockholm (SE)
(72) Inventor: BRANDT, Toni, S-145 60 Norsborg (SE); HÄGGBLAD, Pär, S-754 23 Uppsala (SE); JONSSON, Jonas, S-178 32 Ekerö (SE); JÄNDEL, Magnus, S-194 60 Upplands Väsby (SE); KARLSSON, Krister, S-112 43 Stockholm (SE); KARLSSON, Roland, S-117 21 Stockholm (SE); LÖNNBERG, Emanuel, S-754 23 Uppsala (SE); OSBORNE, Stuart, S-122 63 Hägersten (SE); STENHOFF, Martin, S-163 56 Sp nga (SE)
(74) Representative: Norin, Klas
(86) International application number: PCT/SE2000/000932
(87) International publication number: WO 2000/068864

(56) References cited:
- EP-A2- 0 909 069
- WO-A1-95/31061
- WO-A2-98/14897
- US-A- 5 846 132
- US-A- 5 890 963
- US-A- 5 899 810

## Description

### Technical Field

The present invention relates to communications networks and in particular to the real-time communication between several users of an application in such a network.

### Description of Related Art

Multi-user communications applications are currently being developed, for example for multi-user games. Such games may be played by a number of users connected to the same LAN or even to different parts of larger networks, such as the Internet. For such applications, three main synchronization models are used: client-server synchronization, peer-to-peer synchronization or broadcast synchronization. Some multi-user games on the Internet today involve up to 100 000 players, of which several thousand may be playing at the same time. All synchronization methods used today cause rather long delays. Therefore, the multi-user games played over the Internet today are games in which the speed is not critical. For example, fast action games, such as car racing games or battle games, in which the user must react to what is happening within fractions of a second cannot be played with acceptable quality using any of the standard synchronization methods.

Dial-in networks typically use client-server synchronization. In this case, a server receives data from all players. It has to find out what information each player needs and send it. The central server is an obvious bottleneck in the system. Central client-server games can support 2 - 250 players. The higher number refers to servers where the update rate is as low as 2 Hz. The central server adds latency both because of the increased transport distance and the processing and scheduling delay in the server. Consider e.g. a situation where the clients are on the U.S. West coast while the server is on the U.S. East coast. About 80 ms of transport latency and at least several 10 ms of processing latency are caused by the client-server mode of operation.

Therefore, client-server synchronization is not feasible for real-time applications with large numbers of players in which the delay is critical.

Peer-to-peer synchronization means that all clients send application data directly to all other clients. This model is frequently used for games that are played over the public Internet. Game developers provide a free application lobby server where players meet for setting up games and for joining ongoing games. Once a game has started it is played in the peer-to-peer mode without drawing any resources from the game developer's site.

Peer-to-peer synchronization has obvious scaleability problems since the network load is proportional to the square of the number of players; the client access bandwidth and CPU power requirement are proportional to the number of players. The payload in each packet is 10 - 40 bytes, which means that the protocol overhead usually is more than 50%. Small game packets give a large protocol overhead. With header compression methods, however, this overhead can be reduced significantly. Peer-to-peer games over the Internet suffer from unpredictable delays and frequent collapses because of loss of synchronization.

It follows that peer-to-peer synchronization, too, is best adapted to small networks, with communication over relatively short distances and between a limited number of users.

Broadcast synchronization can be used by a limited number of players on a Local Area Network (LAN) but is not suitable for larger networks.

Because of the restrictions posed i.a. by the synchronization methods, multi-participant communications with good real-time characteristics is not possible with current technology.

With multicast the information that has to be transmitted in the network can be significantly reduced, in that information only has to be transmitted once to each multicast server, instead of once to each user. Each multicast server then copies the information and transmits it to the users connected to it. A selection of the information each user needs to receive may be made. This may reduce traffic both between servers and between each server and its users. Such a solution for use in gaming is disclosed in US 5 841 980.

In the system disclosed in US 5 841 980 each user only has the information related to the part of the game which is relevant to the user in the current situation, e.g. information about the geographical area he is in. If the circumstances change, for example, if the user moves to another room, information that is important in the new circumstances will not be available to the user.

Document US 5890963 discloses a system for maintaining continuous and progressive game play in a computer network. The system includes at least one server and at least one game-playing client, in communication with each other through a computer network. Each server includes a memory storing game data which includes initial game data specifying an initial game state and which includes accumulated game data specifying updates to the initial game state. Either the server or the client includes memory storing knowledge base rules and storing an executable computer game program for applying the knowledge base rules to the game data. The executable computer game program generates responses to the client and updates the accumulated game data. The system optionally comprises a second game-playing client and a second server including memory which stores game data connected to the network. The game data in the second server may be derived from and identical to the game data in the first server, thereby establishing a second instance of the first server game state.

### Object of the Invention

It is an object of the present invention to improve the real-time performance in communications networks, especially for collaborative communication between a large number of participants.

### Summary of the Invention

This object is achieved according to the invention by a server unit as defined by claim 1.

This enables keeping the whole state of the application in one or more units in the network, which removes the need for each client to store the entire state, thereby reducing the need for memory capacity in each client and also the bandwidth needed for communication with each client. If each part of the state of the application is stored in more than one network node or client, a back-up facility is achieved.

The object is also achieved according to the invention by a client unit as defined by claim 18.

The method and apparatus according to the invention are particularly useful for distributed interactive applications, especially involving real-time communication.

Preferably, the receiving means of said server means is adapted to
- receive subscription information from at least said first client, said subscription information identifying objects of the distributed interactive application about which said first client wishes receive information,
- transmit information to said at least one client unit in dependence of the subscription information received from that client unit,
- said server unit further comprising at least one client subscription list for storing said subscription information.

Accordingly, said client unit further comprises means for setting subscription information for specifying at least one object of the distributed interactive application from which available information should be received and means for transmitting said subscription information to said application access server.

This reduces the amount of information to be transmitted to each user, thereby reducing the transmission delay and also helping each user analyze the information, since only the most important information for a particular user is shown to that user. Each client is able to decide for itself what is important.

In a preferred embodiment, the receiving means is adapted to receive urgency information relating to said first client from at least a second client. The urgency information may be transmitted to the first client, or application state information regarding said second client may be forwarded to at least said first client in dependence of said urgency information. The urgency information may also be used to indicate that certain application state information should not be forwarded to said first client. The urgency information may be used to change a client subscription.

In said preferred embodiment the client unit further comprises means for setting urgency data for specifying at least one other client that should receive state information from the client as soon as possible.

Advantageously, the transmission means of the client unit for transmitting application state information is adapted to arrange information in object information packets, each packet relating to one object constituting part of the application, before transmitting the packets to the server unit, and said receiving means is adapted to extract information from packets received from the server unit.

The application access server system is independent of the application and can therefore support a wide range of different applications.

Application access server units working together could communicate over a network, which preferably offers reserved or managed transmission capacity. The aggregated bandwidth requirement of an application can be estimated by the network management system and sufficient network resources can be allocated to the reserved network that is connecting the application access server units. New applications are allowed only if resources are available. The network management also controls the resending and duplication policy of the application access server units. Multicasting and resource reservation protocols can be used on the aggregated streams between the application access server units. The advantage of this system is that resource reservation on the player level is not necessary. Application clients can usually handle occasional lost packets if the overall statistical performance is good. Using the application access server according to the invention means that a game client never will lose synchronization permanently since the application access server units always maintain the game state.

### Brief Description of the Drawings

The apparatus and method according to the invention will be described in more detail in the following, with reference to the appended drawings, in which:
Figure 1 illustrates an embodiment of a network according to the invention;
Figure 2 illustrates an application access server according to a first embodiment of the invention;
Figure 3 shows an embodiment of an application state record according to the invention;
Figure 4 shows an application client according to an embodiment of the invention;
Figure 5 illustrates the communication stacks used according to an embodiment the invention;
Figure 6 shows a second embodiment of the application access server according to the invention;
Figure 7 shows an application router used in the second embodiment of the application access server;
Figure 8 is a schematic representation of a hierarchical structure of application access servers used in an embodiment of the invention.

### Detailed Description of Embodiments

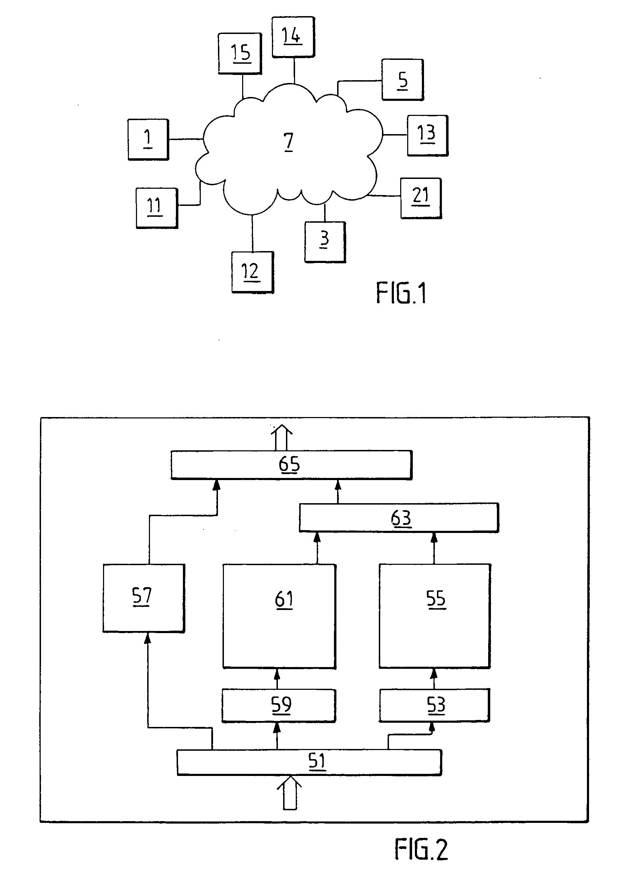

Figure 1 shows an embodiment of a communications network according to the invention. According to the invention, the network comprises at least one application access server. In Figure 1, a first 1, a second 3 and a third 5 application access server are shown, connected to each other through a network 7, for example, a reserved telecommunications network. It may also be any other type of network, however, networks in which it is not possible to reserve network resources, such as the Internet, may provide a lower quality if heavily loaded. A number of clients 11, 12, 13, 14, 15 are also connected to the network 7. A client can connect to the appropriate application access server 1, 3 or 5 in any way known in the art, as will be discussed in more detail below.

Clients can communicate with each other through the application access servers for the purpose of running a distributed interactive application, in which a large member of participants simultaneously affect and contribute to the state of the application, for example a real-time multi-user game. Between each client and the application access server to which it is connected there will usually be a low capacity connection, such as a modem connection. Between two application access servers, on the other hand, high and variable network capacities will be available. The application access servers according to the invention are therefore adapted to handle the information about the state of the application in such a way as to reduce the amount of information transmitted to each client, by transmitting to each client only the information that is most relevant to this client. Between the application access servers, the transmission capacity will not normally be a problem and therefore more information can be transmitted between application access servers.

One or more application lobby servers 21, of a kind known per se, may also be present in the network. These servers typically comprise functions that allow the clients to register for a particular type of service, handle billing functions, etc.

According to the invention, the software required for the application is found in the client 11, 12, 13, 14, 15. To use the communication functions according to the invention, therefore, the user must make sure he has the application software needed. The application software may be retrieved in any way known in the art, for example, downloaded from the Internet or installed from CD-ROM. If required for the application he must also register with the application lobby server. Typically, the application lobby server 21 will provide an address, usually an IP address and port number of one or more application access servers 1, 3, 5, but this address may also be obtained in any other way.

The user connects to an application access server in the way common in the art, normally by entering the IP address of the application access server or a pool of application access servers. Several algorithms exist for selecting the appropriate one of a number of nodes in the network identified by the same address. The application access server receives information from the user and starts transmitting information to the user, as will be described in more detail in the following. Instead of the client logging in to the application access server, the application lobby server can also transmit client network addresses to the application access servers.

The application is assumed to consist of a set of objects, which are controlled by the participants. An object is an entity in the application that is controlled by a human participant or that is generated in a client and cannot be regenerated locally in each application client, e.g. controlled by a random generator or other unpredictable computing process. Application objects can be things that the participants will intuitively recognize as objects, or game figures, but they can also be background data structures such as environment variables that are controlled by players. An application object is controlled by one or several players. Each object typically has a set of properties and attributes that may be changed while the application is running. In a game these properties may be a character's strength and other capabilities, or the maximum speed of a car, and the attributes may be, for example, items collected by the character.

The information received from the user will normally comprise three different types of information, in addition to the signalling overhead: state information, subscription information, control data and urgency information. The state information is information about the object or objects that are controlled by the user, which should be distributed to other users of the application. The subscription information lists the client's priorities regarding different application objects provided by the application access servers. For example, information regarding a certain group of objects should be received at once it becomes available, or as often as possible, whereas information from another group of objects is not that urgent. Several priority levels may be set, for example, in the form of acceptable delays or precedence in case of lack of bandwidth. The urgency information generated by a client may be used to override or change the subscriptions of another client so that the other client will receive information about objects that are not included in its subscription, or to make sure that the client does not receive certain information. All three types of information will be discussed in more detail below.

As an example, the application of a real-time game being played by a large number of users, will be described. Such games are played today with a limited number of players, located fairly near each other, for example in a local area network (LAN). Played over a wide area network, such a game may in the future involve several thousands of players, typically distributed over a large game field, or virtual geographical area. With prior art technology this is not possible with an acceptable quality, as discussed above.

Each player is immediately affected only by the things that happen near him in the virtual game area. The farther away another player is, the less important changes to this player will be. For example, a player may be involved in a fight with a first hostile player, a friendly player may be coming to rescue and a second hostile player may be trying to stop the friendly player. At the same time, other players will be doing things that may become interesting at a later time, but for the time being, the player's main concern is to survive the fight. Therefore, the movements of the first hostile player must be displayed immediately. The movements of the friendly player and the second hostile player should also be given a high priority, while the things happening farther away should be given a low priority.

In the example discussed above, obviously, the configuration of the players will change so that at another time information from other players will have the highest priority, usually the players who are located near the user at any given time.

The application access server handles communication with application clients. It receives information about the actions of the client that affect the application state and other information. It also transmits application state information from other participants to the participants according to their subscriptions. Each application client sets subscriptions regarding which application information to receive and transmits information about these subscriptions to the application access server. The application access server stores and updates a record of the subscriptions of the clients that are served by the application access server. The subscriptions of each client are used to determine which data is to be sent to this client. A client might also set subscriptions for another client. In one mode of operation, a master client might for example set the subscriptions of all other clients.

The application access server to which a client is connected is that client's local application access server, and the client is referred to as a local client of that application access server.

The application access server also keeps a client authority list. Each client has the right to change the state of one or more game objects. The client authority list has one entry for each client where the identifiers of the objects that are controlled by the client are stored. The application access server checks the authority each time it receives object state information from a client. The game state will be updated only if an identifier found in the information packet matches one of the numbers in the entry for the client in the authority list, otherwise the information is ignored. Object state information arriving from other application access server units is not verified since the sending application access server has already checked for authority.

Each application access server also communicates with other application access server units, sending application state information and, optionally, aggregated subscriptions to them and receiving the same type of information from them. Usually, the information to be transmitted to the other application access servers is packaged according to an appropriate protocol and transmitted without being prioritized or sorted in any way. It would of course be possible to select the information to be transmitted to each application access server in dependence of the users' subscriptions of its local clients. Aggregated subscriptions are the sum of all application object requests from clients belonging to a given application access server. For example, the application access server may use multicasting to other application access server units. This ensures that each application access server unit receives all needed updates and that the game state is distributed efficiently over the application access server units.

Urgency data is set by a client if the data is important to another client but this other client is not aware of this and therefore cannot set his own subscriptions. The urgency is therefore defined by the sending client and may be different for different receiving clients. The application access server alerts the receiving client if urgent data is waiting. The urgency information may also be used to prohibit the forwarding of certain information to one or more clients.

Each application access server also stores and updates a complete or partial copy of the application state. Between them, the application access server units that are allocated to a communication session must store the complete application state. In the simplest case, every application access server stores the complete application state, but it is also possible to split the information between the application access servers, with or without overlapping information. Such solutions require special software to handle the distribution of the appropriate data to each application access server.

The application access server communicates with the application lobby server for setting up the application, adding and removing participants while the application is running and handling errors and network failures.

Figure 2 shows an application access server 50 according to an embodiment of the invention, with its functional entities. This application access server could be implemented in hardware or in software. In connection with Figure 2, only a general description is given. Appropriate formats and protocols will be discussed later.

The application access server receives data from each client in the network, and from other units, such as other application access servers, through input buffers 51. There is one input buffer for each client, remote application access server and application lobby server, although in Figure 2, for clarity, only one input buffer is shown. The actions of each local participant are sent as payload in application object packets that arrive in the input buffer of the application access server associated with this client. These application object packets update application objects that are controlled by the participant. The application object packets are written into the application state record using a set of insertion rules.

The data received from the clients may comprise three types of data: data about the state of the application (state data), data about the subscriptions of the client (priority data) and other control information, such as requests for time reference, status of other clients and other information from the system. The state data is passed through an application object packet pipeline 53, to an application state record 55. The application state record 55 keeps all the state data for all the relevant objects, as will be described in more detail in the following. The application state record also keeps the urgency data as described above.

Groups of clients may be defined, said group for example comprising the participants in a working group or, in the case of a game, in the same team. In this case, subscriptions and/or urgency data may also be specified for groups of users, not only for individual users.

Control data, especially data that does not have to be handled in real time, such as information on added or removed application objects, is passed from the input buffer 51 to the application access server control unit 57. In a hardware implementation the control unit 57 may be a microprocessor. Control data handled by the control unit could be related, for example, to the creation and destruction of players and objects, and to groups of players and objects.

Subscriptions are passed through an application priority control protocol message pipeline 59 to a Client Priority List (CPL) 61 containing the subscriptions of each client that is supported by the application access server. The subscriptions can be updated by the clients and by the application access server control unit. The control unit could decide, for example, to update the subscriptions of a client in response to an urgency message received from another client.

Several different prioritization strategies can be employed by the application clients using the application access server system.

A simple method is that application clients send an enumerated list of objects to the CPL 61. In this case objects not on the list could be updated, for example, in a round-robin mode when all the objects on the list have been updated. If all objects in the list have been updated the remaining objects could be updated, for example in a round robin mode. The subscriptions of a particular client comprise a list of all objects for which a subscription has been set by this client. In addition the list stored in the application access server preferably comprises a flag for each object indicating if new information for the object has been received. The flag is used to determine whether or not information about a certain object needs to be sent to the client. When the information has been sent to the client, the flag is reset. When a new update for an object is received by the application access server, the flag is set again.

The client subscriptions could also be defined with a time interval associated to each object. The client would then send a series of requests, for example of the format:
<object number>, <object priority>, <object update time interval>, <flags>. A simple list could simply have the format <object number>, <object priority>.

The application access server will try to send updates to the client so that each object is updated at least once during each time interval with the priority given according to the <object priority> field in the request. An infinity symbol could be used so that some objects are not updated at all. A special "send only new complete object state" flag can be set. This option is used when the client wants to receive updates for the object with long intervals (several seconds). It would be wasteful to send incremental updates if the wanted time resolution is longer than the state refresh interval.

An output pipeline 63 receives subscription information from the client priority list 61 and uses this information to search the application state record 55 for information to be transmitted to the client in question, using an appropriate algorithm as discussed above. The selected state information passes from the application state record 55 through the output pipeline 63 to an output buffer 65 and from the output buffer to the client. The control unit 57 sends control messages to clients and remote servers, for example, for the purpose of synchronizing clocks or providing latency estimates to clients.

Although the application access server shown in Figure 2 is shown to have only one of each type of unit, preferably the application access server comprises one input buffer 51, one application object packet input pipeline 53, one priority message pipeline 55, and one output processing pipeline 63 and one output buffer 65 for each client, and for each other server, etc. in the network with which the application access server exchanges information. Alternatively, a group of clients or servers, could share one input buffer 51, one application object packet input pipeline 53, one priority message pipeline 55, and one output processing pipeline 63 and one output buffer 65. The application access server also comprises one client priority list 61 for each client, server, etc.

The data received from other application access servers comprises object state data from other clients. It may also comprise priority information from these clients, which is preferably aggregated in such a way that each object appears on the priority list only once. In this case, the information will be packaged so that there is one priority list for each application access server, that is, each application access server is treated like a client. The information received from another application access server is treated in the same way as the information received from a client, except that the input and output buffers 51, 65, also have to perform certain protocol handling, as will be discussed below. Alternatively, no subscription information will be received from other application access servers, in which case all state information will be transmitted to these application access servers.

The application access server may also handle optional fair play modes where all players are updated simultaneously (see below).

As mentioned above, one or more application lobby servers (21 in Figure 1), of a kind known per se, may be present in the network. Application lobby servers are responsible for updating the configuration data during the game providing the application access server with data such as:
- IP addresses or other network addresses of new application access server units that enter the game
- Updated lists of network addresses identifying the participants served by the application access server. This enables new participants to join an ongoing application.
- Updated lists of enumerated game objects. For each object it is specified which application access server is responsible for storing the state, if the state is distributed between the application access servers. It might also be specified who is authorized to update the state. This enables creation, destruction and change of control of game objects. Clients can also create and destroy game objects.
- A new complete or partial game state. This enables recovery after a pause or failure in the game when the application access server system has discarded the game state.

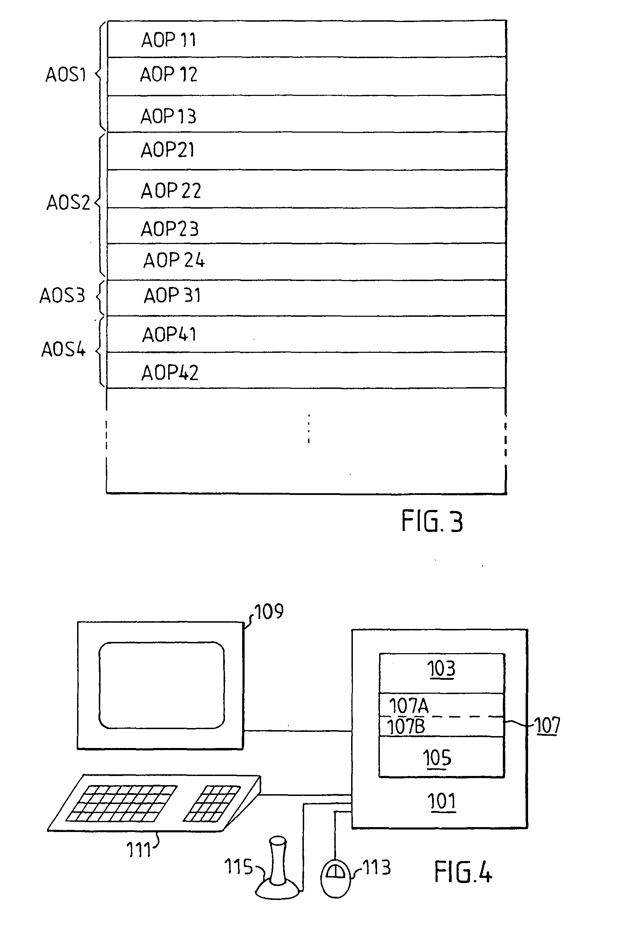

Figure 3 shows an example of an application state record used in the application access server according to the invention:
The state of each application object is stored in the application state record as a set of enumerated application object states AOS1 - AOS4. Each application object state consists of a series of application object packets AOP11-AOP13, AOP21-AOP24, AOP31 and AOP41-AOP42, respectively. An object packet is a container for object data. All data that is sent from an application to a remote application client or server is wrapped in an application object package so that it can be handled by the application access server system.

The information received by an application access server from all other application access servers to which it is connected is used to update the application object information in the application state record. Preferably, there are two types of application object packet: 1) a reference application object packet comprising all current data about an object, and 2) an incremental packet comprising only information about what has changed since a time that is given by the time stamp of the APO to which the incremental packet refers. The first AOP in an AOS must be a Reference packet, which may be followed by a set of Incremental Packets, or by a reference packet. Some games will only generate reference packets.

The application state record also keeps a record of the application object packets that need to be delivered to other application access server units. This may be done using a data structure new_client_data that can be implemented as a matrix new_client_data(i, k) where each element is a flag. The parameter i is a client number and the parameter k is an application access server number. The flag is set if the application object packet should be delivered to the external application access server.

As an example of how application object states can be used to describe application objects, Figure 3 shows an application object state AOS 1. This object might describe the position of a vehicle in a racing game. The position of vehicle (x1, y1) is first sent as game payload in a reference application object packet AOP11 at game time t1. To save bandwidth, the relative change in the position (Δx2, Δy2) at game time t2 is transmitted as an incremental application object packet AOP12. The incremental application object packet AOP12 points to the reference application object packet AOP11 as reference. At game time t3 a new incremental position (Δx3, Δy3) is sent in a third application object packet AOP 13. The third application object packet AOP13 has the second application object packet AOP12 as reference. After having received all three application object packets AOP11, AOP 12, AOP 13, the client can calculate the position of the vehicle at time t3 according to (x1+Δx2+Δx3, y1+Δy2+Δy3).

When a new reference application object packet is received for a particular object, the application state record can delete all previous packets belonging to the object and just store the new reference packet. Note that the syntax and semantics of the game payload can only be understood by the game application running on the client terminal. Applications should send reference packets frequently in order to avoid long interrupts caused by lost data.

An alternative way of coding the application would be to let the third application object packet AOP13 at time t3 use the reference application object packet AOP11 as reference and state only the change of position, δx, δy relative to (x1, y1). This would save application access server memory since the second application object packet AOP12 at time t2 could be deleted as soon as the third application object packet AOP 13 arrives. The client would now calculate the position of the vehicle at time t3 according to (x1+δx3,y1+δy3). The application access server uses information in the application object packet header for determining if a previous application object packet is expired and can be deleted. In Figure 3 AOS 2 consists of four application object packets AOP21, AOP22, AOP23 and AOP24, where the first one AOP21 is a reference packet and the three following application object packets AOP22, AOP23, AOP23 are incremental. The last increment has time stamp t8. AOS 2 thus describes the state of object 2 up to game time t8. The AOS 3 in Fig. 3 consists only of one reference application object packet AOP31, which is sufficient for describing the object.

Before allowing a new client to sign on to the application, the application access server may, according to a preferred embodiment, estimate the increased bandwidth needed and ensure that this bandwidth is available in the network. Methods for doing this are well known in the art. If no capacity problems are foreseen, this step will not be needed.

Figure 4 shows an embodiment of a computer on which a client according to the invention is running. The computer comprises a processing unit 101 in which programs are run, for example an application program 103 according to the invention. The processing unit also communicates with an application access server (not shown) and possibly other units in the network, by means of communications software 105. The application program 103 communicates with communication software 105 through a network application interface 107. The network application interface has functions for sending and receiving application data from the application program.

The computer also comprises a screen 109 for displaying data about the application, for example an overview of the part of the game that is of immediate interest to the participant. For inputting data to the application, for example, the computer may have a keyboard 111, a mouse 113 and/or a joystick 115 connected to it, by means of which an object in the game may be moved, or other types of changes may be entered.

The client application 103 receives said input, processes it and displays the result of it on the screen 109, and/or by means of for example loudspeakers and/or haptic display means. It also forwards application state data based on said input to the network application interface 107, from which it is forwarded to the application access server.

Through the communications software 105 and the network application interface 107 the application 103 also receives application state information concerning other objects from the game access server, processes it and displays the result on the screen 109.

In this embodiment the network application interface 107 comprises two parts: an application programming interface 107A and an application access interface (AAI) 107B. This solution was chosen to enable the use of a standard program module, such as Microsoft DirectPlay, for implementing the network AAI 107B, as discussed below.

The application access interface (AAI) 107B is a software module in the client terminal. It is an intermediate module between the network interface and the network API 107A. The application access interface 107B receives and terminates application object packets and control messages, and removes application object packet headers before the application object packet payload is passed to the network application interface 107. It also translates control messages and passes them to the API 107A or handles them directly. The AAI 107B handles functions that are required for the communication with the application access server to function but that are not implemented in the client application program. Therefore, it may not be necessary for clients that have been developed for use with an application access server according to the invention. For example, the AAI can handle the clock that places time stamps on the application object packages, if the client does not have functions for this.

In the upstream direction, AAI 107B receives messages and objects from the API 107B. Data concerning application objects from the client is transformed into the application object packet format. Application object packets are transmitted over the communication link to the application access server.

The AAI 107B also generates upstream application control protocol messages, in particular, application control protocol subscription messages. The information that is needed for setting up subscriptions and other application control protocol messages must be extracted from the application via the network API and from urgency list messages from the application access server.

A physical client e.g. a game console could be engaged in several games or host several human players in the same game. Each physical application client can run several logical application clients where a logical application client corresponds to one instance of an application connected to one instance of the Application Access Interface. Application clients in this document correspond to a logical application client. A network address pointing to a logical application client could consist of the IP address of the physical client combined with the port number of the application access interface.

The best performance is achieved if the application access server system is considered when the application program is developed. Functions for determining subscriptions indicating the preferred order of receiving data can then be included in the application program. Messages could be directly directed to a co-player with high urgency if it is apparent from the situation in the game that the receiving player cannot predict the high priority of the message. Consider e.g. a situation in a game where player 1 is stalking player 2. Player 2 is suddenly attacked by player 1 without having any warning. Player 2 is unable to set the correct priority for messages from player 1 but player 1 can send a high urgency message to player 2.

For developing the network API, for example, the Microsoft DirectPlay API may be used. The AAI is then needed to format the output such as ACP and AOP, and may be written as a DirectPlay service provider.

Using the Microsoft DirectPlay API there are at least two different ways of extracting subscriptions. Note that the subscription should show the priority of the local participant for receiving updates about enumerated application objects. Application objects in this document are the same as "players" in the DirectPlay notation since DirectPlay "players" are application entities that can send and receive messages. A DirectPlay "player" can be controlled by a human player or it could be an autonomous game object.

In the first method information gained from DirectPlay's receive method is used. By setting the DPRECEIVE_FROMPLAYER flag and specifying the IpidFrom parameter appropriately, the method can retrieve the first message from the "player" that is identified by the IpidFrom parameter. This information can be used by the application access interface for making the subscription. If no message from the identified "player" was available in the DirectPlay message queue, it would be reasonable to put the identified application object at the top of the priority list.

In the second method the DirectPlay Send method is used, in which the idTo parameter identifies the "player" or player group that should receive the messages. It is reasonable to assume that "players" receiving frequent messages are associated with application objects with which the local player is presently interacting. The AAI could hence subscribe to "players" identified by the idTo parameter.

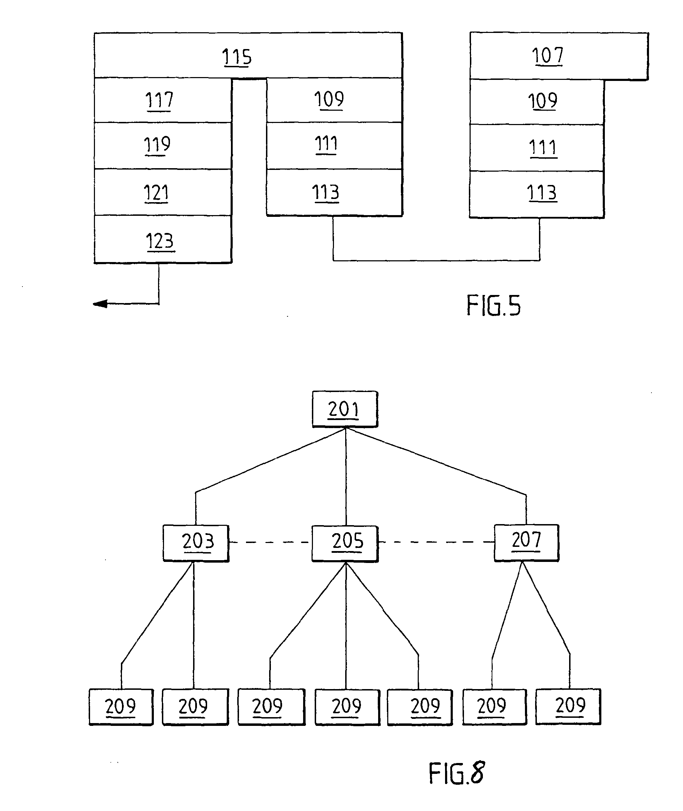

Figure 5 shows an example of the communication stacks that may be used according to the invention. One communication stack is used for the communication between a client such as the one shown in Figure 4 and an application access server. The client and the application access server comprise essentially the same type of stack. In the client the uppermost layer of the stack communicates with the application access interface layer 10 of Figure 4, and in the application access server the stack communicates with an application access server software is also shown. Figure 5 also shows a communication stack for use between an application access server and another unit in the network. This other unit may be, for example, another application access server, or an application lobby server. The communication stacks used conform to the OSI model.

The client communication stack communicates with the application programming interface 107 in the client. The uppermost level of the stack, is the ACP/AOP layer 109. This level is handled by the application access interface 107 in Figure 4.

From the ACP/AOP layer 109 ACP/AOP packets containing information such as application object data or subscription information are delivered to a link layer 111. The link protocol may be for example PPP. In the opposite direction, the ACP/AOP layer 109 removes header information from information packets received from the application access server and forwards the application state information to the client application. The ACP packets may be terminated in AAI. The subscription itself can be handled by the client itself, if it comprises functions for handling the subscription.

The lowest layer is a channel layer 113, comprising channel coding and the actual physical connection.

The application access server comprises essentially the same type of stack for communication with the client: a channel layer 113' corresponds to the channel layer of the client. The channel layer 113' is connected to an AOP/ACP layer 109' through a link layer 111'.

An AOP/ACO layer 109' in the application access server communicates directly with an application access server software 115 which is arranged to handle the AOP and ACP information.

The application access server can be built with interfaces to many different client link protocols. Ideally, an application access server should be able to handle any link protocol, including UDP, TCP and RTP. RTP is a protocol developed specifically for the transmission of voice and video data.

The link protocol should be designed so that the protocol overhead on the link from the application access server to the client is kept low. This can be done, for example, by using an appropriate link protocol where IP/LTDP/RTP is not used or by efficient IP/LTDP/RTP header compression. The link layer should further minimize latency and provide information to the application access server on the properties of the link. Such information could include expected bandwidth, bit error rate and link latency.

An appropriate transport protocol, here called the application transport protocol, ATP should be used on the link but application object packets and application control packet messages could also be sent directly via the link protocol.

For communication between two or more application access servers, a stream of IP packets are sent from the output buffer 65 of the local application access server (see Figure 2) to one or more remote application access server units participating in the ongoing application. Each IP packet contains a TCP or UDP packet and the TCP or UDP payload is an Application Transport Protocol (ATP) packet.

The uppermost protocol layer of the communication stack for communication between two application access servers is an AOP/ACP layer 117 similar to the one used in the client communication stack. An application object packet might be quite small, that is, ~ 40 bytes or less. To make the communication between two application access servers more efficient, several application object packets are therefore aggregated in an application transport protocol (ATP) layer 119. The next layer is a TCP or UDP layer 121 and the lowermost layer is an IP layer 123, both of which 121, 123 are well known in the art. From the IP layer information packets are transmitted to remote application access server units. The output buffer unit (65 in Figure 2) keeps a set of sorting buffers for collecting application object packets that will be the ATP payload. The structure of these buffers depends on the distribution strategy. There might be one sorting buffer for each remote application access server.

An application object packet may include a field listing the clients that should get the update. This field is translated to a list of application access server units that should receive the application object packet. The application access server keeps a table that matches client numbers to application access server numbers. This means that all relevant application access server units eventually will get the update. The application access server units will then dispatch the application object packets to their local clients. A simple optional mode of operation is that all application access server units receive all application data.

The local application access server identifies application object packets that need to be sent to remote clients via remote application access server units. The application state receiver of the local application access server is therefore scanned and application object packets with the new_client_data flag set are found. An application object packet header comprises a recipient group field listing one or more client addresses to which the application object packet should be sent. This recipient group field is examined. Client addresses are translated to remote application access server addresses and copies of the application object packet are put into the sorting buffers that correspond to the recipient application access server units. The recipient group field is modified for each application object packet copy so that only recipient clients that belong to the receiving application access server or group of application access servers remain. The new_client_data flag is reset.

Application Object Packets contain payload from the game application. The application access server system cannot read the internal payload format of the games. Such messages are therefore wrapped in an application object packet (AOP). The header of an AOP can be read by the application access server system. It is used for appending information that is needed for the timely delivery of the game payload.

In the embodiment discussed here, three non-standard protocols are used in addition to standard Internet protocols such as IP, TCP, UDP and RTP:
- Application Object Packet (AOP) is a container for game data. All data that is sent from a game application to a remote game client or server is wrapped in an AOP so that it can be handled by the application access server system.
- Application Control Protocol (ACP) is used for sending control messages. Control messages are sent between application access server units, clients and application lobby servers.
- Application Transport Protocol (ATP) is used for sending aggregated game data between application access server units and optionally also between application access servers and clients.

Application Object Packets contain messages from the game application. The application access server system can not read the internal message format of the games. Such messages are therefore wrapped in an application object packet (AOP). The header of an AOP can be read by the application access server system. It is used for appending information that is needed for the timely delivery of the game payload.

Application messages can completely define the state of an application object or they can alternatively describe the application object relative to a reference state. AOPs are therefore of two types: Reference packet (BP) and Incremental Packet (IP).

An application object packet consists of a header followed by game specific payload: Header fields that may be used in the AOP include:
1) Application object number
2) Time stamp showing the time in the game when the AOP was generated
3) Optional packet number. Combined with the object number and the time stamp it creates a unique identifier of the packet. Packet numbers are only used if several AOPs, belonging to the same game object, have the same time stamp.
4) If, for example, voice and/or video information may be transmitted, a flag showing if the packet contains this type of information may be included.
5) A flag showing if the AOP is a reference packet or an incremental packet
6) If the AOP is incremental, a pointer to the reference AOP. This pointer could consist of the time stamp and the packet number of the reference AOP. The reference AOP could be either a basic AOP or an incremental AOP.
7) A record describing the clients that should receive the message. This can be done by listing the clients or use a predefined client group. The default is that all clients receive the data. An urgency field is associated with each receiving client or client group. This field is used for alerting the receiver if the message is urgent. Three urgency bits would be sufficient.
   Flags that can be set in the urgency field are,
   Forbidden: the AOP should not distributed to the client or client group
   Fair_Play: use fair play mode (see below)
   Very_Urgent: overrides client priorities
   Urgent: client will be alerted
   Normal: delivered according to client priorities
   Not_Urgent: delivered by best effort
   A simple format could be:
   <number of entries> <client 1><urgency for client 1><client 2><urgency for client 2> ......
   Later items in the list overrides previous items. The field:
   2, all Forbidden, client_3 Urgent
   could e.g. mean that all clients are forbidden to receive the AOP with the exception of client number 3 that will get the AOP in the Urgent mode.

8) Size of payload.

The application control protocol (ACP) is used for sending control messages between game clients, application access server units and the application lobby server (ALS). An outline of ACP is provided here. Each ACP packet consists of a header and a message body.

An ACP message may include the following fields:
1) ACP message type
2) Time stamp showing the time in the game when the message was generated
3) Size of message
4) Message body

Note that the source of the message is identified by higher protocol levels. In the following the messages that can be transmitted using ACP will be outlined.

ACP messages from client to the application access server may include the following:
- Terminate client. The application access server management system removes the client from all records and notifies the Application Lobby Server (ALS). The client is responsible for notifying the ALS if it is leaving the game. The ALS is responsible for finalizing the contact with the terminated client e.g. by sending the final scores and notifying other players.
- Subscriptions
- Add game object. A new game object number is generated by the application access server and an application access server memory is allocated for receiving object state information from the client.
- Remove game object. The object is removed from all application access server memory after all clients and remote application access server units that are listed for receiving updates have received the last update.
- Send estimated latencies for objects. This request includes a list of object numbers. The application access server responds by sending the estimated end-to-end latencies for the objects. The client application uses the estimates for latency hiding.
- Define object group. Object groups are useful for giving short names to long lists of object numbers that otherwise might have to be sent on the client link. DirectPlay handles hierarchical "player" groups so the game API will be able to provide useful group definitions. The application access server stores object group information and treats an object group as an alias for a list of objects. The message might have the format:
   message type = define object group; > <object group name> <list of objects>
- Define client group. Client groups are useful for setting short names on long lists of client numbers that otherwise might have to be sent over the client link in AOP fields. The application access server stores client group information and treats a client group as an alias for a list of clients. The message might have the format.
   message type = define client group <client group name> <list of clients>
- Send time reference. This message is used for downloading a reference time from the application access server.

ACP messages from the application access server to the client include the following:
- Urgency list. This message is used for alerting the client if urgent unread AOPs are waiting. The application access server scans all unread AOPs that has the present client on the AOP recipient list. The urgency list could have the format:
   <urgency class 1> <list of object numbers> <urgency class 2> <list of object numbers> and so on
- Latency estimate. This consists of a set of entries according to:
   <game object number> <upstream latency> <upstream latency variance> <downstream latency> <downstream latency variance>
      A "don't know" symbol can be used for any field except the first.
   • Confirm object group number. The application access server has received a "define object group" message from a client. It confirms that a global object group number has been allocated. The message body would include.
      <global object group number> <client's object group name>
      A simple method for allocating object numbers would be:
      Assume that a total of N application access server units are active. Enumerate all active application access server units. If application access server number k is asked for a new object number it allocates the lowest free object number from the series {k, N+k, 2N+k, 3N+k, ....}
- Confirm client group number. The application access server has received a "define client group message" from a client. It confirms that a global client group number has been allocated. The message body would include
   <global client group number> <clients client group name>
   The same algorithm that is used for allocating global object group names could be used for allocating client group names.
- Clock synchronization. The application access server sends a time reference according to:
   <client time> = <time> + <client link latency>
   The client has an algorithm for adjusting the local clock according to a series of received clock synchronization messages.

ACP messages from one application access server to another include:
- Aggregated subscriptions. Aggregated priority lists showing the objects that the clients belonging to the sending application access server need to see, that is, the objects for which information should be sent to the sending application access server. The list has the same format as a simple client priority list. It is built by adding all valid local client priority lists and removing duplicates.
- Resend request. This message has the same format as a simple priority list and is interpreted as a request for resending the state of the listed objects.
- Define object group. Object group definitions may be distributed between application access servers. Using global names for long lists of object numbers helps in reducing traffic.
- Define client group. Client group definitions may be distributed between application access server.

ACP messages from an application access server to an application lobby server include:
- Client has been terminated. This message is sent when a client has voluntarily disconnected from the game.
- Client time-out The application access server may send a message to the ALS if a client has been silent for a long time or if the link to the client is closed. The ALS decides on further actions such as removing the client from the game.

An ALS can act as a client. The ALS might e.g. control game objects that keep the scores of the game. A port of the ALS is then connected to the AAS as a client using a "link" protocol such as TCP/IP. The ALS can therefore use the same messages as a client. Other ALS to AAS messages are listed here:
Application set-up information, including
   - Network address including port number identifying the ALS
   - An URL that uniquely identifies the game
   - IP addresses of other application access server units that participates in the game
   - A list of network addresses including application port numbers that identifies the clients.
   - Optionally a list of enumerated game objects. For each object it is specified which application access server that is responsible for storing the state. It might also be specified who is authorized to update the state.
   - Optionally, an initial game state to be stored.
   - Optional data specifying control strategies such as the time-outs.
   - Add application access server. The network address, number and client list of the new application access server is specified.
   - Remove application access server. The number of the application access server to be removed is specified
   - Add client. This includes the network address of the new client; optionally the initial state of the new game objects that are controlled by the new client.
   - Remove client. The application access server system removes the client from the game.
   - Modified client status. This message changes the clients authority to control game objects or associates the client to a different application access server. The format could be:
      <client number> <application access server number> <object numbers>
         where the object numbers indicates game objects that are controlled by the client.

The Application Transport Protocol (ATP) is used for transporting Application Object Packets (AOP) and Application Control Protocol (ACP) messages. The ATP has a series of AOPs and ACP messages in the payload and is mainly used for sending aggregated data between application access server units. Application access server units would typically communicate using the protocol stack IP/UDP/ATP. ATP is hence on the same logical level as the RTP protocol.

The ATP header includes:
- An URL that identifies the game
- Earliest AOP or ACP time stamp
- Latest AOP or ACP time stamp
- Number of AOPs and ACP messages

ATP is normally only used for communication between application access servers, as shown. If the bandwidth of the connection between a client and an application server is sufficiently high it may also be used for these connections.

Conventional protocols such as TCP/IP and/or UDP/IP are used for communication with the Application Lobby Server and other application access server units. TCP/IP should be used for setting up the game and UDP/IP should be used for sending real-time game data, for the following reasons:
TCP resending and reordering is too slow and complex for the game application. TCP reordering might delay the delivery of the most recent update for the purpose of delivering too old data. Resending of data that is no longer needed is obviously wasteful. The application access server units know the precise priorities and can request resending from several sources if needed.

RTP can be used for sending time stamps but RTP is designed for audio and video streams and is not very well suited for game streams. RTP could, however, be used for carrying voice and video streams that are associated with games.

A "fair play mode" may also be implemented in the system. In this mode the application access server units synchronize the delivery of critical application information so those updates are received by all clients concerned simultaneously. This mode can be used for competitions.

The Application Lobby Server decides, while setting up an application, if the fair play mode is available. If the fair play mode is allowed, the sending client decides for each transmitted AOP if fair play delivery should be used. This is done by setting the Fair_Play flag in the urgency field of the AOP. The application access server system is now responsible for delivering the AOP "simultaneously" to all clients. This requirement overrides all other client priorities.

A possible technical solution for this is the "bucket synchronization" method. The application access server units agree to update the clients with a fixed absolute delay. Updates arriving earlier have to wait for the agreed time slot. This method has the disadvantage of increasing the overall delay in the system. The fair play mode can alternatively be handled by the game application. In this mode the client application applies the agreed delay to received game data using the time stamp of each game object to calculate how much the packet should be delayed to achieve the agreed absolute delay.

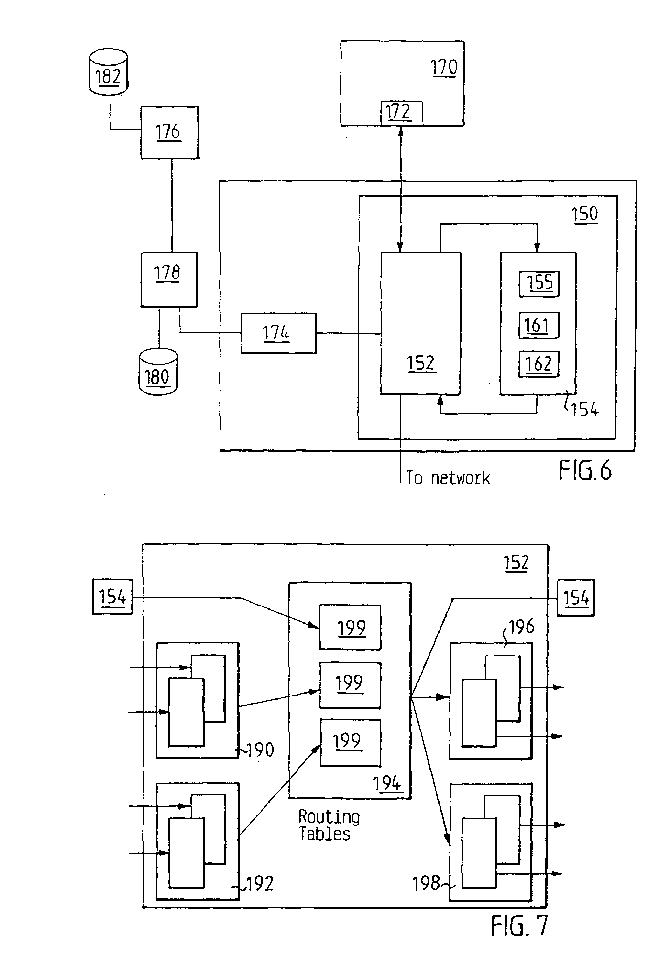

Figure 6 shows another embodiment of an application access server 150 according to the invention. Where nothing else is said, this embodiment is similar to the one discussed in the above. In this embodiment the communication functions of the application access server are divided between one or more application routers 152 and an application server 154. The application server 154 comprises an application state record 155 and a client priority list 161 as described in connection with Figure 1. The application router 152 communicates with one or more clients 170, through the client's application programming interface API 172, which will be discussed in more detail below. Each application access server 150 comprises one application server 154 serving one or more application routers 152. The application router 152 also communicates with other nodes in the network, such as application routers in other application access servers (not shown). Preferably, the application server 154 and the application router 152 are implemented as separate hardware units to optimize each with regard to their specific functions. Alternatively, they may have separate processor resources allocated to them. In particular, the application router must run without interruption since interruptions would affect negatively the real-time performance of the client applications.

As before, the application access server to which a client is connected is that client's local application access server, and the client is a local client of that application access server. Similarly, the application server and the application router serving the client are the client's local application server and application router.

The application server receives ATP packets containing basic objects (see below) and control messages from clients through the application router. Before processing a basic object e.g. by putting it in the application state database, the application server checks that the sending client is allowed to update the object. If the client is not authorised to update the object, the object is rejected and the sending client may receive an error message. Before processing a control message, the application server checks that the sending client is allowed to request the indicated operation, and if not rejects the control message and optionally sending an error message back to the sending client. Consider e.g. a case when the sending client requests that an object group is deleted. This group might have been created by the content server, which is a special client, responsible for managing the game state and communicating with the application access server over a standard client API. The content server has uploaded authorisation rules to the game access server that forbids clients to delete the object group. In this case, the application server will reject the control message that requests the deletion of the object group.

This authorisation check is performed using tables of authorisation rules that shows what kind of operations that the client is allowed to perform. The authorisation tables are set up by clients or by the control units using initialization files.

A client can, if authorised to do so, request the creation of an object group. A client can also add members, remove members and delete the object group. Members of the an object group are objects and object groups. Request for any such operation on object groups are sent by the client as a control message which is broadcasted by the application routers to all application servers that participate in the session. The object group is identified by an identifier which has the same format as an object identifier. Each application server includes an object group database 162 that for each application session stores the object groups that has been created during the session. The object group database 162 stores at least the following fields for each object group: 1) the object group identifier 2) a list of the members of the object group 3) a list of the parents of the object group. A parent of an object group A is an object group that has the object group A as a member. The object database is organised as the object database in the previous embodiment but for each object there is a list of object groups that are parents to the object.

Objects received from clients, and from other application access servers, that should form part of the application state is forwarded from the application router 152 to the application server 154 and stored in the application state record 155. Subscription information received from clients and other application access servers is forwarded to the application server 154 and stored in the client priority list 161.

A site manager 174 controls the function of one or more application access servers 150, each comprising one or more application routers 152 and an application server 154, preferably through a connection to the application router 152. The site manager could also use the standard protocol SNMP (Simple Network Management Protocol) to control the site.

One site therefore comprises one site manager and a number of application access servers 150 controlled by one site manager 174. The main tasks of the site manager 174 are connection management, client connections, resource management, configuration of application servers and routers, admission control, authentication of clients, time synchronisation for a site, network management and supervision of load and status of application servers and application routers.

The site manager optionally receives Application Transport Protocol (ATP) packets containing control messages from clients. It should be noted that the ATP in this embodiment is different from the ATP described in connection with the previous embodiment and will be described below. Before processing a control message, the SM checks that the sending client is allowed to request the indicated operation, if not the control message is rejected and the sending client receives an optional error message. This authorisation check is performed using tables of authorisation rules that shows what kind of operations that the client is allowed to. The authorisation tables are set up by clients or by a lobby access server178, using initialization files.

One or more lobby access servers 178 are provided for connection to the application lobby server 176, one or more lobby access servers 178. The application lobby server is discussed in connection with Fig. 2. The lobby access server or servers 178 are connected to the site manager 174. The lobby access server handles game session requests from lobby servers and arranges and manages game sessions. This includes registration and authentication of lobby servers, and accounting. It also keeps information about games and lobby severs in a database. A central control unit (not shown) may be used to supervise and maintain the application communication system.

An application communication system comprises one or more interconnected sites and lobby access servers. A central control unit (not shown) may be used to supervise and maintain the application communication system.

The lobby access server 178 may comprise or be connected to a database 180 comprising information about the application lobby servers present in the network, such as which application lobby server or servers are allowed to add clients to a particular game, or a particular application access server. The application lobby server 176 may comprise, or be connected to, a database 182 comprising client data such as authorization profiles for each client.

The communication between the site manager and the application server or servers it controls includes adding and removing sessions, and adding and removing clients from sessions. The communication between the site manager and the application router or routers includes the same as above as well as login permissions for clients. Also, error messages are sent from the application server or application router to the site manager.

Preferably, the local application router 152 can handle both stream objects and basic objects received from clients, other application routers or other units in the network. Clients send one copy of each update of a basic object to the local application access server. The object contains e.g. the status of the player's avatar. The basic object is forwarded to all relevant application servers in the session. Basic objects received by an application router from clients or other application access servers are stored in the application state record of the associated application server. Players that want to receive the stream object issues a subscription to the local application server. The application server sends a series of updates of the object from the local application state record according to the parameters of the subscription. Stream objects are not stored in the application server. Basic objects and stream objects will be discussed in more detail in the following. An application router receives Application Transport Protocol (ATP) packets from clients, the local application server, from other application routers and optionally from the local site manager. ATP packets are transported through other network protocols, such as UDP/IP. Other application routers are either remote (belonging to a remote Application Access Server) or local (belonging to the same Application Access Server as the application router). The received ATP packets are of three different types: basic objects and stream objects in Application Object Packets (AOP), control data in Application Control Packets (ACP), and client messages in Client Message Packets (CMP). ATP packets are either deleted or routed by unicast or multicast to receiving clients, application routers, the local application server or to the local site manager. The different routing cases are shown in the table. Control packets that are addressed to the receiving application router are terminated and not routed.

A routing table for an application router is shown in the table below:

| Received ATP packet | Routed to the following nodes | Mandato-ry(M)/ Optional(O) | Comment |
|---|---|---|---|
| Stream object from client | Local clients that are subscribing to the stream object | M | |
| | Other application routers that has clients that are subscribing to the stream object | M | |
| | All other application routers | O | A special case that is easy to imple-ment |
| | Clients (if any) that are specified in the optional address field of the AOP. Remote clients are reached via their local application routers. | M | Direct addressing requires more bandwidth than subscriptions and should be used sparingly. |
| Basic object from client | The local application server | M | |
| | Clients (if any) that are specified in the optional address field of the AOP. Remote clients are reached via their local application routers. | M | |
| Client message from client | Clients that are specified in the address field of the CMP. Remote clients are reached via their lo-cal application routers. | M | |
| Control packet from client | The local application server | O | Depending on the nature of the mes-sage |
| | The local application router | O | |
| | The local site manager | O | |
| Basic object from local application server | Clients that are specified in the address field of the AOP. | M | |
| | Remote application servers (via one of their application routers) that are specified in the ad-dress field of the AOP. | M | |
| | All remote application servers optionally via a multicast address | O | A special case that is easy to imple-ment |
| | Remote clients that have subscribed to the object (via their application router) that are specified in the address field of the AOP. | O | A special case that is expensive in bandwidth but makes the game state well defined at any given time |
| Control packet from local application server | Clients, local site man-ager, remote application server or application router that are specified in the address field of the ACP. | | |
| Stream object from appli-cation router | Local clients that are subscribing to the stream object | M | |
| | Clients and application routers (if any) that are specified in the optional address field of the | M | |
| | AOP. Remote clients are reached via their local application routers. | | |
| Basic object from applica-tion router | The local application server | M | |
| | Clients (if any) that are specified in the optional address field of the AOP. | M | |
| | Remote application servers (via one of their application routers) that are specified in the op-tional address field of the AOP. | M | |
| Control packet from appli-cation router | Clients, local site man-ager, remote application server or application router that are specified in the address field of the ACP. | M | |
| Control packet from the local site manager. | Clients, local or remote application server or ap-plication router that are specified in the address field of the ACP. | M | |

Stream objects are not stored in the application server. Clients typically use them for sending the position of moving items in a virtual world. They can be transported very fast through the network. Only the most recent version of a stream object is assumed to matter for the receiving client. The handling of stream objects is typically unreliable, as they may be dropped deliberately by application routers for flow control. All stream objects received by an application router are forwarded to all local clients that have subscribed to the stream object, or to a stream object group comprising the stream object. The application router 152 also comprises priority or subscription information for stream objects, since these objects are not handled by the application server, as will be discussed below.

Typically a client who wants to join an application session, for a example a particular ongoing multiplayer session, connects over the Internet to a application lobby server 176. The application lobby server provides information on ongoing application sessions and usually also allows clients to create new sessions and invite other clients to join. A client may send a request to the application lobby server 176 to create, delete, join or leave an application session. If the application lobby server accepts any such session control request it will forward the request to a lobby access server 178. If creation of a session is requested the lobby access server 178 will respond by issuing a application session identifier. For requests such as a request to delete a session or add or remove a client the application lobby server 176 will include the application session identifier in the request that is sent to the lobby access server 178. The lobby access server 178 responds by investigating if resources are available in the application access server system to match the requested operation. If resources are available, the lobby access server 178 will perform the requested operation.

If creation of a session is requested the lobby access server 178 will select a set of sites that will serve the session and send control messages including the session identifier to the relevant site managers 174 requesting that the session is initiated on suitable application access servers 150.

If deletion of a session is requested the lobby access server 178 will send control messages including the session identifier to the site managers 174 of the sites that are running the session requesting that the session is deleted.

If joining of a client is requested the application lobby server 176 includes at least the network address of the client 170, the session identifier and optionally a site identifier in the control message to the lobby access server 178. The network address might e.g. be the IP address and the port number of the client application process. The lobby access server 178 selects a suitable site and sends a control message to the site manager 174 of the site requesting that the client 170 joins the game session. This control message includes at least the network address of the client 170 and the session identifier to the site manager 174 of that site. The site manager selects a suitable application access server and a suitable application router within that unit to be responsible for serving the client and sends a control message to the client 170 inviting the client to join the game. The network address of the application router that will serve the client and a password is included in the message. The client 170 contacts the relevant application access server 150 including the password in the control message. The application access server 150 includes the client 170 in the local client database and the client can proceed with sending and receiving game data.

Alternatively, the site manager 174 can send the network address of the application router 152 that will serve the client 170 to the lobby access server 178, the lobby access server 178 will forward the network address and a password to the application lobby server 150. The application lobby server 176 will forward the network address and a password to the requesting client 170 that connects to the relevant application access server as described above.

Although no buffers, software processes etc. are shown in Figure 6, it will be appreciated by the skilled person that they may be needed to implement the application access server of the invention.

Clients 170, application access servers 150 and site managers 174 communicate using the Application Transport Protocol (ATP). ATP packets are typically carried as payload in UDP packets as discussed in the previous embodiment. The ATP used in this embodiment will be described in the following. The Application Transport Protocol includes two protocol levels 1) compound ATP packet 2) regular ATP packet.

A compound ATP packet comprises a of a Source Header and several regular ATP packets. The Source Header comprises the following fields:
1) Application session identifier
2) Client identifier indicating the sending client
3) Optional fields that are used by the protocol for guaranteed transmission including acknowledgement fields and packet counters.

A regular ATP packet (in the following also called "ATP packet") consists of an ATP header, an ATP optional header, an optional ATP Target Header and an ATP Content Packet.

The ATP header may include the following fields:
1) A Type Field, which is a set of flags indicating the type of the Content Packet and the presence of optional fields in the Content Packet. Content packet types are, control message, client message, basic object or stream object. The intended receiver of a message can be indicated in the Type Field.
2) A flag indicating if the ATP packet is sent in the reliable or the unreliable mode
3) A flag indicating if a Target Header is present
4) A set of flags indicating the presence and content of the ATP optional header.
5) A field indicating the size of the content packet

The ATP optional header consists of the following optional fields:
1) session identifier
2) client identifier
3) object identifier

The ATP optional header is used for identifying the Content Packet. The application payload that is associated with a basic object might e.g. be sent in the Content Packet. The ATP optional header is used for identifying the the basic object using the relative addressing system that is described below.

The ATP target header TH is used for direct addressing of ATP packets. The ATP address of the receiver is indicated in the ATP target header. The first position in the TH is a byte that holds the size of the TH. The TH consists of an array of dynamic address fields that is either a list of client identifiers indicating the intended receivers of the message or a list of stream object keys. A key is an attribute of the stream object that may be set by the sender. Clients can subscribe to stream objects that carry a specific key without knowing the object identifiers of the wanted stream objects. In a game like Quake, keys can be used for selecting stream objects belonging to different rooms. The stream objects are used for sending the positions of the avatars in the game. A key is assigned to each room in the game. Players that are sending stream objects add the key that corresponds to the room where the avatar is located. Players that are receiving data subscribe to stream objects with keys that correspond to rooms in which they are interested. Stream objectkeys can alternatively be used to identify a team or to classify objects, for example, as dangerous. A stream object filter in the local application access server receives the player's subscriptions for stream object keys and ensures that the player gets stream objects with the requested keys.

The ATP Content Packet (CP) can be of any of the following types 1) basic object 2) stream object 3) control message 4) client message. A basic object, stream object and client message CP includes application payload. Control messages include a message type and message parameters. The Application Control Protocol specifies the format of the message type field and the parameters of each message.

Session identifiers, client identifiers and object identifiers are dynamic address fields as described below. Client groups and object groups have the same identifier format as clients and objects, respectively.

The following names and definitions are used in this document. An Application Object Packet is an ATP packet that contains an application object in the Content Packet. An Application Control Protocol packet is an ATP packet that contains a control message in the content packet. Sending a basic object, stream object or client message means always that an ATP packet with the appropriate type of content packet is sent. A client message packet is an ATP packet containing a receiver address and a client message in the content packet.

ATP usage examples include the following:
A) A client is sending a basic object to the local application server. The object identifier but not the client identifier or the session identifier are put in the ATP optional header. No ATP target header is needed. The object payload is put in the content packet. The use of optional headers and dynamic address fields means that the header overhead can be as small as four bytes. This is essential since objects are often sent over a low bandwidth connection.
B) A client is sending a client message to another client. The object identifier and the client identifier of the sending client are put in the ATP optional header. No session identifier is needed. A target header is used containing the client identifier of the receiving client. The message payload is put in the content packet. The input filter of the application router on the sending side adds the session identifier to the target header. The output filter of the application router on the receiving side removes the session identifier before forwarding the packet to the receiving client.

ATP uses dynamic address fields. A dynamic field is a variable length prefix code. A prefix code is a code where each code field in a bit stream can be uniquely decoded without reference to previous code words. A simple example is the alphabet {10, 110, 1110,....}. Huffman codes are optimal (shortest expected length) prefix codes for a given statistical distribution of symbols.

An alternative format of dynamic address fields is dynamic size integers. Dynamic size integers are well known in computer science. Dynamic size integers are used whenever small values are most common, but large values must be possible. For 2-byte dynamic size integer, the most significant bit tells the size of the integer - 1 means one byte and 0 means 2 bytes. For 4 byte dynamic size integers, the two most significant bits tells the size of the integer - 01 means one byte, 10 means two bytes, 11 means 3 bytes and 00 means 4 bytes.

Dynamic address fields may be used according to one of the following two methods:
In the first method, ATP has fields for three different identifiers 1) application session identifier 2) client identifier and 3) object identifier. The application session identifier is globally unique and allocated by a central authority such as the net manager or lobby access server. Each client, application router, application server and optionally site managers has a client identifier and are in the following called nodes. A client group identifier has the format of a client identifier.

The client identifier is unique only in a specific application session. A central authority such as the or lobby access server or a central control unit allocates client identifiers. The client identifier identifies the node only if the application session identifier is known. ATP stores the client identifier in a dynamic field. Each node in an application session is allocated a client identifier with as few bits as possible. Frequently used client identifiers may be allocated the shortest codes e.g. according to the Huffman coding procedure.

The object identifier is unique to a given client in a given session. The client allocates the object identifier. The object identifier identifies the object only if the session identifier and client identifier is known. ATP stores the object identifier in a dynamic field. Each object is allocated an object identifier with as few bits as possible. Frequently used object identifiers may be allocated the shortest codes e.g. according to the Huffman coding procedure.

The second method is the same as the first, with the following exception. The client identifier consist of two dynamic fields. The first field is the identifier of the application router that is serving the client. The second dynamic field is a client index. This index is selected to be as short as possible and is unique to the client given that the application session identifier and local application router client identifier is known. The client identifier of the local application server can alternatively be used instead of the client identifier of the local application router.

The advantage of using dynamic address fields and relative addressing as described above is that the bandwidth usage and delays are minimised. Only the relevant address fields are sent. Examples of this are:
1) A client participates only in one application session. ATP packets containing objects from the clients contain only the object identifier. The application session identifier and the client identifier are not sent, since the application router knows this implicitly.
2) ATP packets containing objects that are sent from the local application server to the client need only to include the object identifier and the client identifier of the client that owns the object.
3) A client that creates a new object can immediately allocate an object identifier.
   Central allocation of globally unique object identifiers would require communication with the central authority before a new object can be created.

The client group addressing is handled according to the following: A client group is identified in ATP by a client identifier. The identifier is created using the same method as for other client identifiers. Creation of a client group is requested by a client during the application session or the creation of the client group is performed as a part of the initialization of the session.

Each ATP packet includes a Type Field in the ATP header. The Type Field indicates the nature of the content. Different codes in the type field indicate e.g. that the content is basic object, stream object, control packet or a client message. The application router can use the type field for default routing in some cases without reading and analysing the address fields. Examples of default routing based on the type field are:
1) all basic objects are routed to the local application server 2) control packets with one specific code in the type field are routed to the local application server and control packets with one other specific code in the type field are routed to the local site manager.

Figure 7 shows an application router 152 used in the embodiment discussed in connection with Figure 6, and how ATP packets flow through the application router. The application router 152 consists of a set of input filters 190, 192, a router core 194 and a set of output filters 196, 198. The application router has an input and an output filter for each node with which it communicates. The router core 194 comprises a number of routing tables 199 for performing the routing of ATP packets.

Packets come from three types of sources - from the application server of the same application access server, and other similar units, e.g. the site manager, from other application routers and from application clients connected to this application router. There are different routing tables 199 for all three types. There is one incoming filter 190, 192 and one outgoing filter 196, 198 for every connection to another application router or an application client. For the connections to the application server, no input or output filters are needed. The filters implement assembling several application packets into transport packages and also handles resending for reliable packets. The application client output 196, 198 filters remove redundant information on the client line and also supplies load balancing for the downlink to the application client 170.

The client 170 that is associated with the output filter, or any other client that is authorised, can send a subscription for a stream object or a stream object key to the output filter of the receiving client. The subscription is sent as a control message that indicates the content of the subscription and the client identifier of the receiving client. The output filter will scan stream objects that arrive to the application routers. Stream objects matching the subscription are sent to the client, possibly after applying a drop rate. A stream object matches a subscription either if the object identifier of the stream object is equal to the object identifier that is given in the subscription or if a stream object key that is carried by the stream object matches a stream object key that is given in the subscription.

Consider a case when the client (that is associated with the output filter) has subscribed to a stream object and the stream object is received from the sending client. The client or any other client that is authorised can set a droprate that is associated with a given stream object. This droprate is sent in a control message to the local application router. If the droprate is set to a value 0 ≤ R ≤ 1 the output filter will deliberately delete a fraction R of the stream objects. If e.g. R = 0.9 only 10% of the arriving packets will be allowed to pass down to the client.

The output filter will delete ATP header fields that do not need to be sent to the client. A direct addressed message from another client contains e.g. the application session identifier and the client identifier of the receiving client in the header. This information is not useful to the receiving client and is therefore deleted by the application router output filter.

The input filter for a specific node, such as a client, receives ATP packets containing stream objects, basic objects, control messages and direct addressed client messages from the node. Before sending the ATP packets to the routing core the following operations is performed:
1) The input filter checks if the client is allowed to update a stream object or a basic object or if the sending client is allowed to send a direct addressed message to the client that is indicated in the message. This authorisation check is performed using authorisation tables that shows what kind of operations that the client is allowed to perform. The authorisation tables are set up by clients or by the LAS via the site manager using initialization files.
2) The input filter adds the address of the sending client in the appropriate ATP field. This address is not sent on the communication link between the sending client and the application router in order to save bandwidth
3) The application router stores lists of client groups. Such lists associates a client identifier that indicates a client group to a list of client identifiers that indicates clients. Lists of client groups are set up by clients or by the LAS via the site manager. If an ATP packet with a client group in the receiver address fields is received by the input filter, it will do one of the following three alternative operations: A) Find the list of client identifiers that belongs to the client group. Find the number N of application routers that should receive at least one copy of the ATP packet. Make N copies of the ATP packet that is put in the output filter to each of the receiving application router. There is a flag in the ATP header that indicates that the content should not be distributed to any remote receiver but only to local clients. This flag is set in each output packet. This is the preferred mode of operation.
4) Find the list of client identifiers that belongs to the client group. Find the number N of application routers that should receive at least one copy of the ATP packet. Make N copies of the ATP packet that is put in the output filter to each of the receiving application router. In each packet replace the client group identifier with a list of receiving clients where the list includes only members of the client group that are local clients to the receiving application router. Duplicate the ATP packet so that in each duplicate the client group identifier is replaced with one unique client identifier indicating one of the clients in the client identifier list that is associated with the client group.
5) A default header is stored by the input filter for each stream object that the client that is associated with the input filter is sending. This default header contains the stream object keys associated with the stream object. If the client sends an explicit header containing stream object keys this header will replace the default header that is stored by the input filter. If the client sends the stream object without a header containing stream object keys, the input filter will add the default header to the stream object before sending it to the router core. This means that the sending client do not have to send one copy of the stream object keys with each copy of the stream object. It is sufficient to send a header containing the stream object keys each time that the keys are changing and the first time that the stream object is sent.

A regular ATP packet carries a content that is either an application object (stream or basic), a control message or a client message. A compound ATP packet consists of an optional small compound header and at least one and usually several regular ATP packets. A compound ATP packet is sent as payload in a standard transport protocol. Usually compound ATP packets are sent as payload in UDP packets.

The method for collecting regular ATP packets in compound ATP packets is essential for achieving the correct balance between bandwidth efficiency and low latency. Large compound ATP packets give high transmission latency but low header overhead and hence efficient bandwidth utilisation. Aggregation of regular ATP packets into compound ATP packets takes place in several modules of the system.

For aggregation in the application client for sending to the local application router, two alternative methods may be used: In the first method, aggregation is under direct control of the application program. Regular ATP packets are sent to an output buffer. The application program decides when the content of the buffer is put into a compound ATP packet and is transmitted to the local application router. In the second method, the aggregation is performed by an automatic algorithm in the client. Regular ATP packets are sent to an output buffer by the application program. The algorithm decides when the content of the buffer is put into a compound ATP packet and is transmitted to the local application router. An example of a suitable algorithm is: A compound packet is sent if the buffer size exceeds a given size S. A compound packet is sent if the time since the last transmission of a compound packet exceeds a given time interval T. The parameters S and T are set by the application program.

For aggregation in application router for sending to a client, for example, the same algorithm as in the second method above may be used.

For aggregation in application router for sending to a application router, sending the maximum size ATP compound packet that is allowed by the next protocol level e.g. UDP will usually work well, since the communication link between application routers can be assumed to be very fast and regular packets are sent very frequently.

If the bandwidth is constrained or ATP packets are sent infrequently it is advised to use the same algorithm as in method 2 of the previous section on aggregations in the application client.

The size S (in bits) should be selected as S < V*TO where V is the communication speed of the link between the two application routers measured in bits per second and T0 is the allowed transmission latency usually 1-10ms. The time interval T should be in the interval 1-10ms.

Clients can send subscriptions for basic objects as control messages to the local application server. A subscription specifies the receiving clients, a target for the subscription and subscription parameters. A subscription is an instruction to the application server to send a series of basic objects to the receiving clients. A series of updates of each basic object is sent according to the parameters of the subscription and depending on how the source of the basic object updates it.

The client sending the subscription is usually the receiving client but a client may also make a subscription on behalf of another client. A subscription can also be issued on behalf of a client group. All clients in the client group will then receive the result of the subscription.

The target for the subscription is a set of basic objects identified by object identifiers according to the ATP protocol. The target can be described by 1) an object identifier, 2) a set of object identifier 3) an object group identifier 4) a mixed set of object identifiers and object group identifiers 5) general Boolean expression including object groups and objects as operands and logical operators AND, OR and NOT. A correctly defined target expression is evaluated by the application server using the information in the object database and the object group database. The result of this evaluation is always a finite set of basic objects.

Subscription parameters may be used to specify how often, how many times, and for how long the content of the subscription is to be delivered. This may be specified as the maximum rate at which updated versions of the object should be received. If the owner of the object updates it at a slower rate, each new version will be received as soon as it is delivered. If the object is updated faster than the selected maximum rate, the updates will be received at precisely the selected rate. Some of the intermediate versions will not be received in this case.

A content server or master client may have superior knowledge of the state of the game. It could therefore be suitable that the master client subscribes to basic objects on behalf of a target client. The master client then builds and submits the subscription to the system. The local application access server delivers the basic objects requested in the subscription directly to the target client or target client group.

A subscription belongs to a client or a client group. A subscription refers to a set of game objects. This set can be expressed as a general Boolean expression including object groups and objects.

The Application Access Server (AAS) will try to deliver objects with the subscription frequency. The delivery time is the inverse of the subscription frequency. Objects that exist in the database when the subscription is issued will be delivered within the delivery time. If an object in the database is modified while the subscription is active, The AAS will try to deliver it within the delivery time.

A Subscription Class is a positive integer. Two methods for delivering data according to the subscription class is described here.

Method 1: Subscriptions with the highest class are first satisfied completely. Next, the AAS will try to satisfy the subscriptions in the next highest class completely. This means that subscriptions in lower classes never might be satisfied. If the bandwidth is insufficient for delivering objects within a subscription class with the requested frequency the AAS will scale all frequencies within the class so that it becomes feasible to deliver to the client.

Method 2: Three different classes are used. The different classes are called 1 = HIGH, 2 = MEDIUM and 3 = LOW. With class 1 the object is always sent to the subscriber at maximum rate until the buffer is full and the rate drops to zero. With class 2 the object's send rate to the subscriber is proportional to buffer load. The less buffer capacity the lower rate. With class 3, the object is sent to the subscriber only if there are no other objects in the buffer.

In one specific implementation application object packets may include several enumerated payloads. In that case subscriptions have an optional Weight parameter. The Weight parameter is an integer. Weight = n means that the first n payloads in the object are delivered.

Some objects may not be updated at regular intervals, but instead an exact number of times. Therefore, it is possible to request a specific number of updates regarding a particular object. The application server will then set a counter that is associated with the object to an integer value that is specified in the subscription. The counter is decremented by one unit each time that the object is delivered. The subscription is removed if Counter = 0.

The client may request that the obj ect be sent at the requested frequency even if the same update has been sent before. This is done by setting the "forced sending" FS flag.

Also, to prevent information relating to old subscriptions to overload the network, the time to live, or duration of a subscription should be set. The subscription is removed after the subscription time-to-live expires.

Stream objects are distributed between application routers using one of the following methods:
Method 1) A stream object that is received by one application router is duplicated and sent to all other application routers that participates in the application session. This may be done efficiently, for example, by associating all application routers that participates in the application session with an IP multicast address.
Method 2) Each application router receives a set of subscriptions to stream objects and stream object keys from local clients. All such subscriptions are aggregated to a joint subscription that includes all stream objects and stream object keys that local clients subscribes to without any duplications. Stream objects but not stream object keys that are generated by local clients are removed from the aggregated subscription. The aggregated subscription is sent to all other application routers. A application router that receives an aggregated subscription from another application router and that finds the source to any of the stream objects and stream object keys in the aggregated subscription is among the local clients will send that part of the subscription to the subscribing application router.
Method 3) Each application router prepares an aggregated set of subscriptions as in Method 2. The aggregated subscription is sent to a parent application router that has been assigned by the site manager. The parent application router delivers the subset of the aggregated subscription that is available and includes the remainder in its own aggregated subscription that is sent to the parent application router that has been assigned to the first parent application router. This assumes that the management system has organised an hierarchy of application routers for the application session.

Basic objects are distributed between application servers. A application server is always reached via one of its associated local application routers. When an application server sends a basic object to another application server, the first application server always sends the basic object with the second application server's identifier in the recipient address field of the ATP packet to one of the local application routers. This application router will send the object to a local application router of the second application server. The local application router of the second application server will send the object to the second application server.

Basic objects are distributed between application servers using one of the following methods:
Method 1) A basic object that is received by one application server is duplicated and sent to all other application servers that participates in the application session. This may optionally be done efficiently by associating one local application router for each application server that participates in the application session with an IP multicast address.
Method 2) Each application server receives a set of subscriptions to basic objects from local clients. All such subscriptions are aggregated to a joint subscription that includes all basic objects that local clients subscribe to but without any subscription parameters. Basic objects that are generated by local clients are removed from the aggregated subscription. The aggregated subscription is sent to all other application servers. A application server that receives an aggregated subscription from another application server and that finds the source of any of the basic objects in the aggregated subscription is among the local clients will immediately send such objects to the subscribing application server and store the relevant part of the subscription. Any further updates of the relevant objects will also be sent immediately to the subscribing application server.
Method 3) Each application server prepares an aggregated set of subscriptions as in Method 2. The aggregated subscription is sent to a parent application server that has been assigned by the site manager. The parent application router delivers the subset of the aggregated subscription that is available and includes the remainder in its own aggregated subscription that is sent to the parent application server that has been assigned to the first parent application server. This assumes that the management system has organised a hierarchy of application servers for the application session.

Control data that needs to be distributed among all application access servers that participates in a session includes e.g. clients joining and leaving and creation and destruction of client groups. Such control data should be multicasted to all application routers in the session. application routers will either terminate the control message or forward it to the local application server or site manager as required.

Some clients may be registered with an application access server as spectators. Spectators are not allowed to upload application actions but they can upload a subscription that depends on the spectator's point of view in the game.

Application access servers according to the invention may also be used in hierarchical systems. Figure 8 shows an example of such a configuration in which an higher-level application access server 201 serves other application access server units 203, 205, 207, which in turn serve application clients 209. The higher-level application access server 201 receives ATP packets with game data and aggregated subscriptions from downstream application access server units that are considered to be "clients". The higher-level application access server unit 201 communicates with other peer application access server units and possibly with application access server units that are on a still higher level in the hierarchy. Hierarchical application access server systems are used for creating a hierarchical distributed representation of the game state for an application involving a large number of clients.

Remote application access server units might be organized in a multicasting tree and in that case there will be one sorting buffer per multicasting group. A simple distribution strategy where all information is sent to all remote application access server units may be used. In that case there is only one buffer.

A set of application clients could have broadband connections providing low latency access so that no application access server is needed. A typical example is that all players are on the same LAN. If the game application and API still expects an application access server, it would be possible to run an application access server function in software on the client machine.

A application access server unit could also be situated at any intermediate position in the network. This means that the "link" protocol between client and application access server could optionally be UDP/IP or TCP/IP. Alternatively, a central game server running a dial-in game service could use application access server units as components. The central site would then consist of a set of modem pools that are connected to application access server units and application lobby servers. This would be an efficient and scaleable architecture for building a central site but it would not have the advantage of early aggregation of game traffic.

## Claims

1. A server unit connectable to at least a first and a second client unit (11, 12, 13, 14, 15) and adapted to enable communication between the first and the second client unit through the server unit for running a distributed interactive application having a state that is changeable both by the first and the second client unit, said server unit comprising first receiving means (53) for receiving information from at least the first client unit, said information comprising at least part of the state information about a distributed interactive application, and state information storing means (55) arranged to store application state information comprised in the information received through the first receiving means from said first client unit, and transmission means (63, 65) arranged to cooperate with the state information storing means for transmitting state information to the first client unit,
said server unit being **characterized in that** it comprises
- second receiving means (59) arranged to receive priority information from at least the first client unit about application state information to be sent to the first client unit, said priority information identifying objects of the distributed interactive application about which the first client unit wishes to receive information and identifying the preferred order in which the first client unit wishes to receive the objects, and
- priority information storing means (61) for storing the received priority information, and **in that** the transmission means is also arranged to cooperate with the priority information storing means for transmitting application state information to the first client unit in dependence of the priority information received from the first client unit.

2. A server unit according to claim 1, wherein the transmission means (63, 65) is further arranged to transmit application state information and/or priority information received from at least the first client unit to at least another server unit.

3. A server unit according to claim 1, further comprising a subscription list for storing subscription information received from said first client unit through the second receiving means (59), said subscription information identifying how often information related to a certain object is to be received in the first client unit.

4. A server unit according to claim 1 or 3, further comprising a subscription list for storing subscription information received from said first client unit through the second receiving means (59), said subscription information identifying the number of times information related to a certain object is to be received in the first client unit.

5. A server unit according to any one of the preceding claims, wherein the second receiving means (59) is adapted to receive urgency information relating to said first client unit from at least a third client unit and forward or not forward application state information originating in said third client unit to said first client unit in dependence of said urgency information.

6. A server unit according to any one of the preceding claims, wherein the state information storing means (55) is adapted to discard stored state information after a predetermined period of time.

7. A server unit according to any one of the preceding claims, wherein said state information storing means (55) is adapted to store the application state information in terms of properties of objects, said objects constituting the application state.

8. A server unit according to claim 7, wherein said state information storing means (55) is adapted to store reference packets or datagrams describing the state of an object at a given time.

9. A server unit according to claim 8, wherein said state information storing means (55) is adapted to store incremental packets describing the change of the state of the object since a particular previous packet, and information identifying said previous packet.

10. A server unit according to any one of the preceding claims, further comprising registration means for registering authorization information for said first client unit, said authorization information indicating the application state objects that said first client unit is authorized to change.

11. A server unit according to any one of the preceding claims, comprising at least one application router (152) comprising the transmission means and the first and second receiving means, and
an application server (154) comprising the information storing means (155, 161).

12. A server unit according to claim 11, wherein the application server (154) and said at least one application router (152) are implemented as separate hardware units.

13. A server unit according to claim 11, wherein the application server (154) and said at least one application router (152) are implemented in software, the software relating to the application server and the at least one application router, respectively, having reserved computing resources.

14. A server unit according to any one of the claims 11-13, wherein the application router (152) is arranged to receive a stream object and transmit it to at least one other server unit.

15. A server unit according to claim 13, wherein the application router (152) is arranged to broadcast the stream object to all other server units involved in a communication session.

16. A server unit according to any one of the claims 11-15, wherein the application router (152) is arranged to receive a basic object and forward it to the at least one application server (154) for storage in a database (162) in the application server and to receive an addressed data packet relating to a basic object from the application server and forward it to a client unit and/or at least one other server unit.

17. A server unit according to any one of the claims 11-16, wherein the application router (152) is arranged to receive control information from the application server (154) and forward it to a client unit and/or at least one other server unit, and/or a site manager.

18. A client unit for use in a terminal in a communications network, comprising application software for a distributed interactive application, said client unit comprising
- at least one input means (111, 113, 115) for reading an input from said terminal, said input constituting at least application state information for the distributed interactive application,
- transmission means (105, 107) for transmitting application state information to a server unit in the communications network,
- receiving means (105, 107) for receiving at least application state information for the distributed interactive application from said server unit,
- means (109) for displaying said state information received by said receiving means, said client unit being **characterized in that** it comprises priority setting means for setting priority information, said priority information identifying objects of the distributed interactive application about which the client unit wishes to receive information and identifying the preferred order in which the client unit wishes to receive the information about the objects,
and transmission means for transmitting said priority information from said priority setting means to said server unit.

19. A client unit according to claim 18, further comprising priority data means for setting urgency data for specifying at least one other client unit that should receive state information from said client unit as soon as possible.

20. A client unit according to any one of the claims 18-19, wherein said transmission means (105, 107) for transmitting application state information is adapted to arrange information in application object packets, each packet relating to one object constituting part of the application, before transmitting the packets to the server unit, and said receiving means is adapted to extract information about application objects from packets received from the server unit.

21. A communications network **characterized in that** it comprises at least one server unit according to any one of the claims 1 to 17.

22. A communications network according to claim 21, further comprising at least one client unit according to any one of the claims 18 to 20.

23. A communications network according to any one of claims 21-22, further comprising at least a second server unit and connection means connecting said first and second server units, wherein communication resources may be reserved on said connection means.

24. A communications network according to claim 23, further comprising at least a third server unit, communicating with said first server unit but not with said second server unit, in such a way that a hierarchy of server units is achieved in the network.

25. A communications network according to any one of the claims 21-23, further comprising at least one site manager (174) arranged to control at least one server unit.

26. A communications network according to claim 25, further comprising a lobby access server (178) arranged to constitute an interface between at least one application lobby server (176) and said at least one site manager (174).

## Patentansprüche

1. Server-Einheit, die mit mindestens einer ersten und einer zweiten Client-Einheit (11, 12, 13, 14, 15) verbindbar ist und entsprechend angepasst ist, um Kommunikation zwischen der ersten und der zweiten Client-Einheit durch die Server-Einheit zu ermöglichen, um eine verteilte interaktive Applikation laufen zu lassen, die einen Status hat, der sowohl durch die erste als auch durch die zweite Client-Einheit verändert werden kann, wobei die Server-Einheit umfasst: ein erstes Empfangsmittel (53) zum Empfangen von Information mindestens von der ersten Client-Einheit, wobei diese Information mindestens einen Teil der Statusinformation über eine verteilte interaktive Applikation umfasst, und ein Statusinformationsspeichermittel (55), das entsprechend eingerichtet ist, um Applikationsstatusinformation zu speichern, die in der Information enthalten ist, die von der ersten Client-Einheit kommend durch das erste Empfangsmittel empfangen wird, und ein Übertragungsmittel (63, 65), das entsprechend eingerichtet ist, um mit dem Statusinformationsspeichermittel zur Übertragung von Statusinformation an die erste Client-Einheit zusammenzuwirken,
wobei die Server-Einheit **dadurch gekennzeichnet ist, dass** sie umfasst:
- ein zweites Empfangsmittel (59), das entsprechend eingerichtet ist, um Prioritätsinformation mindestens von der ersten Client-Einheit über Applikationsstatusinformation zu empfangen, die an die erste Client-Einheit zu senden ist, wobei die Prioritätsinformation Objekte der verteilten interaktiven Applikation kenntlich macht, über die die erste Client-Einheit Information zu empfangen wünscht, und die bevorzugte Reihenfolge kenntlich macht, in der die erste Client-Einheit die Objekte zu empfangen wünscht, und
- ein Prioritätsinformationsspeichermittel (61) zur Speicherung der empfangenen Prioritätsinformation,
und dass das Übertragungsmittel auch entsprechend eingerichtet ist, um mit dem Priorit äts informations speicher mittel zusammenzuwirken, um Applikationsstatusinformation an die erste Client-Einheit in Abhängigkeit von der Prioritätsinformation, die von der ersten Client-Einheit kommend empfangen wird, zu übertragen.

2. Server-Einheit nach Anspruch 1, wobei das Übertragungsmittel (63, 65) ferner entsprechend eingerichtet ist, um Applikations status information und/oder Prioritätsinformation, die mindestens von der ersten Client-Einheit kommend empfangen wird, an mindestens eine andere Server-Einheit zu übertragen.

3. Server-Einheit nach Anspruch 1, ferner umfassend eine Teilnehmerschaftsliste zur Speicherung von Teilnehmerschaftsinformation, die von der ersten Client-Einheit kommend durch das zweite Empfangsmittel (59) empfangen wird, wobei die Teilnehmerschaftsinformation kenntlich macht, wie oft Information bezüglich eines bestimmten Objekts in der ersten Client-Einheit zu empfangen ist.

4. Server-Einheit nach Anspruch 1 oder 3, ferner umfassend eine Teilnehmerschaftsliste zur Speicherung von Teilnehmerschaftsinformation, die von der ersten Client-Einheit kommend durch das zweite Empfangsmittel (59) empfangen wird, wobei die Teilnehmerschaftsinformation kenntlich macht, wie oft Information bezüglich eines bestimmten Objekts in der ersten Client-Einheit zu empfangen ist.

5. Server-Einheit nach einem der vorhergehenden Ansprüche, wobei das zweite Empfangsmittel (59) entsprechend angepasst ist, um Dringlichkeitsinformation bezüglich der ersten Client-Einheit von mindestens einer dritten Client-Einheit zu empfangen und Applikationsstatusinformation, die in der dritten Client-Einheit entsteht, in Abhängigkeit von dieser Dringlichkeitsinformation an die erste Client-Einheit weiterzuleiten oder nicht weiterzuleiten.

6. Server-Einheit nach einem der vorhergehenden Ansprüche, wobei das Statusinformationsspeichermittel (55) entsprechend angepasst ist, um gespeicherte Statusinformation nach einer vorbestimmten Zeitperiode zu verwerfen.

7. Server-Einheit nach einem der vorhergehenden Ansprüche, wobei das Statusinformationsspeichermittel (55) entsprechend angepasst ist, um die Applikationsstatusinformation in Bezug auf Eigenschaften von Objekten zu speichern, wobei die Objekte den Applikationsstatus darstellen.

8. Server-Einheit nach Anspruch 7, wobei das Statusinformationsspeichermittel (55) entsprechend angepasst ist, um Referenzpakete oder Datagramme, die den Status eines Objekts beschreiben, zu einem gegebenen Zeitpunkt zu speichern.

9. Server-Einheit nach Anspruch 8, wobei das Statusinformationsspeichermittel (55) entsprechend angepasst ist, um Inkrementalpakete, die die Veränderung des Status des Objekts seit einem bestimmten vorherigen Paket beschreiben, und Information zu speichern, die das vorherige Paket kenntlich macht.

10. Server-Einheit nach einem der vorhergehenden Ansprüche, ferner umfassend ein Registrierungsmittel zum Registrieren von Berechtigungsinformation für die erste Client-Einheit, wobei die Berechtigungsinformation die Applikationsstatusobjekte angibt, die die erste Client-Einheit zu ändern berechtigt ist.

11. Server-Einheit nach einem der vorhergehenden Ansprüche, umfassend
mindestens einen Applikationsrouter (152), der das Datenübertragungsmittel und das erste und zweite Empfangsmittel umfasst, und
einen Applikationsserver (154), der das Informationsspeichermittel (155, 161) umfasst.

12. Server-Einheit nach Anspruch 11, wobei der Applikationsserver (154) und der mindestens eine Applikationsrouter (152) als getrennte Hardware-Einheiten implementiert sind.

13. Server-Einheit nach Anspruch 11, wobei der Applikationsserver (154) und der mindestens eine Applikationsrouter (152) als Software implementiert sind, wobei die Software bezüglich des Applikationsservers beziehungsweise des mindestens einen Applikationsrouters reservierte Rechenleistungsressourcen hat.

14. Server-Einheit nach einem der Ansprüche 11 bis 13, wobei der Applikationsrouter (152) entsprechend eingerichtet ist, um ein Stromobjekt zu empfangen und es an mindestens eine andere Server-Einheit zu übertragen.

15. Server-Einheit nach Anspruch 13, wobei der Applikationsrouter (152) entsprechend eingerichtet ist, um das Stromobjekt an alle anderen Server-Einheiten, die an einer Kommunikationssitzung beteiligt sind, auszusenden.

16. Server-Einheit nach einem der Ansprüche 11 bis 15, wobei der Applikationsrouter (152) entsprechend eingerichtet ist, um ein Basisobjekt zu empfangen und es an den mindestens einen Applikationsserver (154) zur Speicherung in einer Datenbank (162) im Applikationsserver weiterzuleiten und ein adressiertes Datenpaket bezüglich eines Basisobjekts vom Applikationsserver zu empfangen und es an eine Client-Einheit und/oder mindestens eine andere Server-Einheit weiterzuleiten.

17. Server-Einheit nach einem der Ansprüche 11 bis 16, wobei der Applikationsrouter (152) entsprechend eingerichtet ist, um Steuerinformation vom Applikationsserver (154) zu empfangen und sie an eine Client-Einheit und/oder mindestens eine andere Server-Einheit und/oder einen Site-Manager weiterzuleiten.

18. Client-Einheit zur Verwendung in einer Endeinrichtung in einem Kommunikationsnetz, umfassend Applikationssoftware für eine verteilte interaktive Applikation, wobei die Client-Einheit umfasst:
- mindestens ein Eingabemittel (111, 113, 115) zum Lesen einer Eingabe von der Endeinrichtung, wobei die Eingabe mindestens Applikationsstatusinformation für die verteilte interaktive Applikation darstellt,
- ein Übertragungsmittel (105, 107) zur Übertragung von Applikationsstatusinformation an eine Server-Einheit in dem Kommunikationsnetz,
- ein Empfangsmittel (105, 107) zum Empfangen mindestens von Applikationsstatusinformation für die verteilte interaktive Applikation von der Server-Einheit,
- ein Mittel (109) zum Anzeigen der Statusinformation, die durch das Empfangsmittel empfangen wird, wobei die Client-Einheit **dadurch gekennzeichnet ist, dass** sie ein Prioritätensetzungsmittel zum Setzen von Prioritätsinformation umfasst, wobei die Prioritätsinformation Objekte der verteilten interaktiven Applikation kenntlich macht, über die die Client-Einheit Information zu empfangen wünscht, und die bevorzugte Reihenfolge kenntlich macht, in der die Client-Einheit die Information über die Objekte zu empfangen wünscht, und
- ein Übertragungsmittel zur Übertragung der Prioritätsinformation von dem Prioritätensetzungsmittel an die Server-Einheit.

19. Client-Einheit nach Anspruch 18, ferner umfassend ein Prioritätsdatenmittel zum Setzen von Dringlichkeitsdaten zur Benennung mindestens einer anderer Client-Einheit, die Statusinformation von der Client-Einheit so schnell wie möglich empfangen sollte.

20. Client-Einheit nach einem der Ansprüche 18 bis 19, wobei das Übertragungsmittel (105, 107) zur Übertragung von Applikationsstatusinformation entsprechend angepasst ist, um Information in Applikationsobjektpaketen anzuordnen, wobei jedes Paket sich auf ein Objekt bezieht, das einen Teil der Applikation darstellt, bevor die Pakete an die Server-Einheit übertragen werden, und das Empfangsmittel entsprechend angepasst ist, um Information über Applikationsobjekte aus Paketen zu extrahieren, die von der Server-Einheit empfangen werden.

21. Kommunikationsnetz, **dadurch gekennzeichnet, dass** es mindestens eine Server-Einheit nach einem der Ansprüche 1 bis 17 umfasst.

22. Kommunikationsnetz nach Anspruch 21, ferner umfassend mindestens eine Client-Einheit nach einem der Ansprüche 18 bis 20.

23. Kommunikationsnetz nach einem der Ansprüche 21 bis 22, ferner umfassend mindestens eine zweite Server-Einheit und ein Verbindungsmittel, das die erste und zweite Server-Einheit verbindet, wobei die Kommunikationsressourcen bezüglich des Verbindungsmittels reserviert werden können.

24. Kommunikationsnetz nach Anspruch 23, ferner umfassend mindestens eine dritte Server-Einheit, die mit der ersten Server-Einheit, nicht aber mit der zweiten Server-Einheit kommuniziert, so dass eine Hierarchie von Server-Einheiten im Netz hergestellt wird.

25. Kommunikationsnetz nach einem der Ansprüche 21 bis 23, ferner umfassend mindestens einen Site-Manager (174), der entsprechend eingerichtet ist, um mindestens eine Server-Einheit zu steuern.

26. Kommunikationsnetz nach Anspruch 25, ferner umfassend einen Lobbyzugangsserver (178), der entsprechend eingerichtet ist, um eine Schnittstelle zwischen mindestens einem Applikationslobbyserver (176) und mindestens einem Site-Manager (174) darzustellen.

## Revendications

1. Unité de serveur pouvant être connectée à au moins des première et deuxième unités de système client (11, 12, 13, 14, 15) et apte à permettre une communication entre les première et deuxième unités de système client par le biais de l'unité de serveur, en vue d'exécuter une application interactive distribuée présentant un état qui peut être modifié par la première et par la deuxième unité de système client, ladite unité de serveur comprenant un premier moyen de réception (53) destiné à recevoir des informations en provenance d'au moins la première unité de système client, lesdites informations comprenant au moins une partie des informations d'état connexes à une application interactive distribuée, et un moyen de stockage d'informations d'état (55) agencé de manière à stocker des informations d'état d'application incluses dans les informations reçues par le biais du premier moyen de réception à partir de ladite première unité de système client, et un moyen de transmission (63, 65) agencé de manière à coopérer avec le moyen de stockage d'informations d'état en vue de transmettre des informations d'état à la première unité de système client ;
ladite unité de serveur étant **caractérisée en ce qu'**elle comporte :
- un second moyen de réception (59) agencé de manière à recevoir des informations de priorité en provenance d'au moins la première unité de système client, connexes à des informations d'état d'application devant être envoyées à la première unité de système client, lesdites informations de priorité identifiant des objets de l'application interactive distribuée concernant lesquels la première unité de système client souhaite recevoir des informations, et identifiant l'ordre préféré dans lequel la première unité de système client souhaite recevoir les objets ; et
- un moyen de stockage d'informations de priorité (61) pour stocker les informations de priorité reçues, et **caractérisée en ce que** le moyen de transmission est en outre agencé de manière à coopérer avec le moyen de stockage d'informations de priorité en vue de transmettre des informations d'état d'application à la première unité de système client en fonction des informations de priorité reçues par la première unité de système client.

2. Unité de serveur selon la revendication 1, dans laquelle le moyen de transmission (63, 65) est en outre agencé de manière à transmettre des informations d'état d'application et/ou des informations de priorité, reçues à partir d'au moins la première unité de système client, à au moins une autre unité de serveur.

3. Unité de serveur selon la revendication 1, comprenant en outre une liste d'abonnements pour stocker des informations d'abonnement reçues à partir de ladite première unité de système client via le second moyen de réception (59), lesdites informations d'abonnement identifiant à quelle fréquence des informations connexes à un certain objet doivent être reçues dans la première unité de système client.

4. Unité de serveur selon la revendication 1 ou 3, comprenant en outre une liste d'abonnements pour stocker des informations d'abonnement reçues à partir de ladite première unité de système client via le second moyen de réception (59), lesdites informations d'abonnement identifiant le nombre d'occurrences où des informations connexes à un certain objet doivent être reçues dans la première unité de système client.

5. Unité de serveur selon l'une quelconque des revendications précédentes, dans laquelle le second moyen de réception (59) est apte à recevoir des informations d'urgence connexes à ladite première unité de système client, à partir d'au moins une troisième unité de système client, et à acheminer ou à ne pas acheminer les informations d'état d'application provenant de ladite troisième unité de système client à ladite première unité de système client, en fonction desdites informations d'urgence.

6. Unité de serveur selon l'une quelconque des revendications précédentes, dans laquelle le moyen de stockage d'informations d'état (55) est apte à abandonner des informations d'état stockées, à l'issue d'une période de temps prédéterminée.

7. Unité de serveur selon l'une quelconque des revendications précédentes, dans laquelle ledit moyen de stockage d'informations d'état (55) est apte à stocker les informations d'état d'application sur la base de propriétés d'objets, lesdits objets constituant l'état d'application.

8. Unité de serveur selon la revendication 7, dans laquelle ledit moyen de stockage d'informations d'état (55) est apte à stocker des paquets de référence ou des datagrammes décrivant l'état d'un objet à un moment donné.

9. Unité de serveur selon la revendication 8, dans laquelle ledit moyen de stockage d'informations d'état (55) est apte à stocker des paquets incrémentiels décrivant la modification de l'état de l'objet depuis un paquet précédent particulier, et des informations identifiant ledit paquet précédent.

10. Unité de serveur selon l'une quelconque des revendications précédentes, comprenant en outre un moyen d'enregistrement pour enregistrer des informations d'autorisation pour ladite première unité de système client, lesdites informations d'autorisation indiquant les objets d'état d'application que ladite première unité de système client est autorisée à modifier.

11. Unité de serveur selon l'une quelconque des revendications précédentes, comprenant :
au moins un routeur d'applications (152) comprenant le moyen de transmission et les premier et second moyens de réception ; et
un serveur d'applications (154) comprenant le moyen de stockage d'informations (155, 161).

12. Unité de serveur selon la revendication 11, dans laquelle le serveur d'applications (154) et ledit au moins un routeur d'applications (152) sont mis en oeuvre sous la forme d'unités de matériel individuelles.

13. Unité de serveur selon la revendication 11, dans laquelle le serveur d'applications (154) et ledit au moins un routeur d'applications (152) sont mis en oeuvre dans un logiciel, ledit logiciel étant connexe au serveur d'applications et audit au moins un routeur d'applications, respectivement, présentant des ressources informatiques réservées.

14. Unité de serveur selon l'une quelconque des revendications 11 à 13, dans laquelle le routeur d'applications (152) est agencé de manière à recevoir un objet de flux et à le transmettre à au moins une autre unité de serveur.

15. Unité de serveur selon la revendication 13, dans laquelle le routeur d'applications (152) est agencé de manière à diffuser l'objet de flux à toutes les autres unités de serveur impliquées dans une session de communication.

16. Unité de serveur selon l'une quelconque des revendications 11 à 15, dans laquelle le routeur d'applications (152) est agencé de manière à recevoir un objet de base et à le transmettre audit au moins un serveur d'applications (154) en vue de son stockage dans une base de données (162) au sein du serveur d'applications, et à recevoir un paquet de données adressé connexe à un objet de base en provenance du serveur d'applications et à le transmettre à une unité de système client et/ou à au moins une autre unité de serveur.

17. Unité de serveur selon l'une quelconque des revendications 11 à 16, dans laquelle le routeur d'applications (152) est agencé de manière à recevoir des informations de commande en provenance du serveur d'applications (154) et à les transmettre à une unité de système client, et/ou à au moins une autre unité de serveur, et/ou à un gestionnaire de site.

18. Unité de système client destinée à être utilisée dans un terminal au sein d'un réseau de communication, comprenant un logiciel d'application pour une application interactive distribuée, ladite unité de système client comprenant :
- au moins un moyen d'entrée (111, 113, 115) pour lire une entrée provenant dudit terminal, ladite entrée constituant au moins des informations d'état d'application pour l'application interactive distribuée ;
un moyen de transmission (105, 107) pour transmettre des informations d'état d'application à une unité de serveur dans le réseau de communication ;
- un moyen de réception (105, 107) pour recevoir au moins des informations d'état d'application pour l'application interactive distribuée à partir de ladite unité de serveur ;
- un moyen (109) pour afficher lesdites informations d'état reçues par ledit moyen de réception, ladite unité de système client étant **caractérisée en ce qu'**elle comporte un moyen de définition de priorités pour définir des informations de priorité, lesdites informations de priorité identifiant des objets de l'application interactive distribuée concernant lesquels l'unité de système client souhaite recevoir des informations, et identifiant l'ordre préféré dans lequel l'unité de système client souhaite recevoir les informations connexes aux objets ; et
- un moyen de transmission pour transmettre lesdites informations de priorité dudit moyen de définition de priorités à ladite unité de serveur.

19. Unité de système client selon la revendication 18, comprenant en outre un moyen de définition de données de priorité pour définir des données d'urgence visant à indiquer au moins une autre unité de système client qui devrait recevoir des informations d'état en provenance de ladite unité de système client dès que possible.

20. Unité de système client selon l'une quelconque des revendications 18 à 19, dans laquelle ledit moyen de transmission (105, 107) pour transmettre des informations d'état d'application est apte à agencer les informations dans des paquets d'objets d'application, chaque paquet étant connexe à un objet faisant partie de l'application, avant de transmettre les paquets à l'unité de serveur, et ledit moyen de réception est apte à extraire des informations connexes à des objets d'application à partir des paquets reçus de l'unité de serveur.

21. Réseau de communication **caractérisé en ce qu'**il comporte au moins une unité de serveur selon l'une quelconque des revendications 1 à 17.

22. Réseau de communication selon la revendication 21, comprenant en outre au moins une unité de système client selon l'une quelconque des revendications 18 à 20.

23. Réseau de communication selon l'une quelconque des revendications 21 à 22, comprenant en outre au moins une deuxième unité de serveur et un moyen de connexion connectant lesdites première et deuxième unités de serveur, dans lequel des ressources de communication peuvent être réservées sur ledit moyen de connexion.

24. Réseau de communication selon la revendication 23, comprenant en outre au moins une troisième unité de serveur, communiquant avec ladite première unité de serveur mais ne communiquant pas avec ladite deuxième unité de serveur, de sorte qu'une hiérarchie d'unités de serveur est obtenue dans le réseau.

25. Réseau de communication selon l'une quelconque des revendications 21 à 23, comprenant en outre au moins un gestionnaire de site (174) agencé de manière à commander au moins une unité de serveur.

26. Réseau de communication selon la revendication 25, comprenant en outre un serveur d'accès de lobby (178) agencé de manière à constituer une interface entre au moins un serveur lobby d'applications (176) et ledit au moins un gestionnaire de site (174).
